(19) Europäisches Patentamt / European Patent Office / Office européen des brevets

(11) **EP 3 910 715 B1**

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(21) Anmeldenummer: **21172192.3**

(22) Anmeldetag: **05.05.2021**

(51) Internationale Patentklassifikation (IPC):
*H01M 10/0565* (2010.01)   *H01M 10/052* (2010.01)
*C08F 220/00* (2006.01)   *C09J 133/00* (2006.01)
*G01N 27/00* (2006.01)   *G02F 1/00* (2006.01)
*C08F 2/48* (2006.01)   *C08F 220/42* (2006.01)
*C08F 265/06* (2006.01)   *C09J 4/06* (2006.01)
*C09J 133/18* (2006.01)   *G01N 27/403* (2006.01)

(52) Gemeinsame Patentklassifikation (CPC):
(C-Sets verfügbar)
**H01M 10/0565; C08F 2/48; C08F 220/42;
C08F 265/06; C09J 4/06; C09J 133/18;
H01M 10/052;** G01N 27/403; H01M 2300/0082;
Y02E 60/10; Y02P 70/50   (Forts.)

(54) **HAFTKLEBRIGER ELEKTROLYT**

ADHESIVE ELECTROLYTE

ÉLECTROLYTE ADHÉSIF

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **14.05.2020 DE 102020206126**

(43) Veröffentlichungstag der Anmeldung:
**17.11.2021 Patentblatt 2021/46**

(73) Patentinhaber: **tesa SE
22848 Norderstedt (DE)**

(72) Erfinder: **KLIER, Daniel
21465 Reinbek (DE)**

(74) Vertreter: **tesa SE
Hugo-Kirchberg-Straße 1
22848 Norderstedt (DE)**

(56) Entgegenhaltungen:
**EP-A1- 1 640 427        EP-B1- 1 640 427
KR-A- 20150 016 171**

• **ALEXANDRE SANDRA A ET AL: "A highly
adhesive PIL/IL gel polymer electrolyte for use in
flexible solid state supercapacitors",
ELECTROCHIMICA ACTA, vol. 299, 7 January
2019 (2019-01-07), pages 789 - 799,
XP085590754, ISSN: 0013-4686, DOI: 10.1016/
J.ELECTACTA.2019.01.029**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08F 265/06, C08F 220/42, C08F 220/282,
C08F 220/1808;
C09J 4/06, C08F 265/06;
C09J 133/18, C08K 3/105;**
C08F 220/282, C08F 220/1808;
C08F 220/42, C08F 220/1808, C08F 220/325

**Beschreibung**

Die Erfindung betrifft einen haftklebrigen Polymerelektrolyten und ein Verfahren, den haftklebrigen Polymerelektrolyten in Form eines Klebebandes bereitzustellen, damit dieser einfacher als bekannte Flüssig- oder Festelektrolyte zu kompletten elektrochemischen Systemen oder Zellen wie Batterien, Sensoren oder elektrochromen Zellen verarbeitet werden kann. Genannte elektrochemische Systeme oder Zellen bestehen im Allgemeinen aus Trägermaterialien, Stromkollektoren, Anodenmaterialien, Kathodenmaterialien und dem Elektrolyten.

Elektrolyten sind heute in verschiedenen Anwendungen verbreitet, die sich von Batterien und Akkumulatoren bis hin zu Elektrochromie, also dem Einsatz in elektrochromen Systemen erstrecken.

Elektrolyte sind allgemein chemische Verbindungen, die fest, flüssig oder in gelöst in Ionen dissoziiert vorliegen. Diese chemische Verbindung bewegt sich unter dem äußeren Einfluss eines elektrischen Feldes entlang der Feldlinien. Aber auch die ggf. umgebende Matrix (Polymer, anorganisches Material, Keramik, Folie) zusammen mit der dissoziiert vorliegenden chemischen Verbindung (Leitsalz) wird oft als Elektrolyt bezeichnet. Letztere umfassendere Definition soll im Folgenden verwendet werden.

Kernfunktion eines Elektrolyten ist die Ionenleitfähigkeit von mindestens einer Ionenspezies während sich der Elektrolyt gegenüber anderen chemischen Komponenten eines Systems weitestgehend chemisch inert verhält und diese weder leitet, absorbiert oder mit diesen reagiert. Elektrochemische Zellen, wie Batterien oder Akkumulatoren, elektrochrome Systeme oder auch Sensoren auf elektrochemischer Basis sind üblicherweise aus zwei Halbzellen aufgebaut, die bis auf den Fluss, also dem Austausch, von bestimmten Ionen, chemisch und elektrisch voneinander getrennt sein müssen, um deren bestimmungsgemäße Funktion zu ermöglichen.

Sämtliche zur Trennung der Halbzellen vorhandenen oder bekannten Elektrolyten haben einen wesentlichen Nachteil: sie müssen durch aufwändige Prozesse und Produktdesigns mit den Halbzellen gefügt werden.

Aus dem Stand der Technik sind Elektrolyte bekannt, die z.B. mechanisch aneinandergefügt werden müssen, indem die flächen- oder bahnförmigen Materialien geklemmt, mit entsprechender Bahnspannung fest gewickelt oder an den Seiten mit einem dritten Material geklebt werden. Es sind auch Elektrolyten bekannt, die selbst die Funktion eines Klebers übernehmen, indem sie nach Zusammenbringen der Halbzellen chemisch aushärten. Diese werden flüssig auf eine Halbzelle aufgetragen, mit der zweiten Halbzelle zusammengebracht und im Anschluss ausgehärtet. Die Aushärtung wird entweder thermisch oder mittels einer aktinischen Strahlung wie z.B. UV Strahlung initiiert.

Nachteilig ist, dass die Aushärtung einen kostenintensiven zusätzlichen Prozessschritt darstellt, der Zeit, Entwicklungsaufwand und komplizierte Verfahrenstechnik und Prozessüberwachungsmethoden erfordert. Weiterhin führt das Zusammenbringen der Halbzellen in Batterien oder elektrochromen Systemen mittels des flüssigen viskosen Elektrolyten zu erheblichen Dickenschwankungen, die verhindern, dass ein Produktdesign mit exakt definierter Dicke und damit auch Produkteigenschaften entsteht. Gerade bei gewickelten (zylindrische Zellen) oder gefalteten (Pouch-Zellen) Multischichtaufbauten der Funktionsschichten (Stromkollektoren, Anodenmaterialien, Kathodenmaterialien, Elektrolyten) ist die Inprozesskontrolle eines homogenen Schichtaufbaus nicht möglich und es entsteht kostspieliger Ausschuss. Um Ausschuss zu verringern wird teilweise versucht, nicht ausgehärtete Elektrolytenprepolymer ("Sirup") nach dem Wickeln in die Zelle zu spritzen und dann auszuhärten. Aber auch bei diesem Prozess kann die Schichtdicke nicht überwacht, bzw. präzise gesteuert werden.

Neben der einfachen Herstellung und Applizierbarkeit sind weitere Eigenschaften des Elektrolyten wesentlich: hohe Ionenleitfähigkeit über einen großen Temperaturbereich, Zyklenstabilität, Brandsicherheit, optische Transparenz, gesundheitliche Unbedenklichkeit, Wiederverwertbarkeit und chemische Stabilität gegenüber den anderen Aktivmaterialien. Zudem sinkt die Ionenleitfähigkeit, je mehr Polymer (z.B. PMMA) anteilig in der Mischung ist. Bei zu wenig Polymeranteil reicht die dimensionale Stabilität nicht mehr aus, um mechanische Schäden und Kurzschlüsse zuverlässig zu verhindern, so dass zusätzlich eine poröse Folienmembran in die Elektrolytschicht eingebracht werden muss, was den Prozess verkompliziert und verteuert.

Gelpolymerelektrolyten (GPEs) werden standardmäßig auf Basis von Polyethylenoxid (PEO), Polymethylmethacrylat (PMMA), Polyacrylnitril (PAN) oder Polyvinylidenfluorid-Hexafluorpropylen (PVDF-HFP) gemacht (Dong Zhou, Li-Zehn Fan, Huanhuan Fan, Qiao Shi: Electrochemical performance: Electrochemical performance of trimethylolpropanetrimethylacrylate-based GPE prepared by in situ thermal polymerization; Electrochimica Acta 89:334-338, Feb. 2013). Üblicherweise werden sehr hohe Anteile von Weichmacher/Leitsalz Gemische bis 97 % eingesetzt, um eine hohe Ionenleitfähigkeit zu erreichen. Diese Polymerelektrolyten weisen eine geringe Dimensionsstabilität auf, so dass sie nicht ohne Oozing auf große Jumborollen aufgewickelt werden können und zwar ggf. einen Tack, aber keine Kohäsion aufweisen und daher nicht zur Verklebung von elektrochemischen Halbzellen geeignet sind. In den benannten Beispielen wird zusätzlich auf den porösen Folienträger Celgard 2400 (Celgard LLC, USA) zurückgegriffen, um eine funktionstüchtige Zelle herzustellen.

Beispielsweise sind aus der DE 10 2014 108 012 A1 Leitsalze bekannt, wie z.B. Lithium[3,5-bis(trifluormethyl) pyrazolid] oder LiTSFI. Mit diesen Leitsalzen können hydrolysestabile und chemisch inerte Flüssig- und Polymerelektrolyten hergestellt werden. In der DE 10 2008 062 129 A1 wird eine Haftklebemasse mit einer hohen Permittivität beschrieben, die eine hohe Glasübergangstemperatur besitzt.

Es ist Aufgabe der vorliegenden Erfindung, die vorgenannten Nachteile zumindest teilweise zu überwinden und einen Elektrolyten bereitzustellen, der selbstklebrig (haftklebrig, engl. "pressure sensitive adhesive") ist und eine definierte Dicke hat, die vorzugsweise unabhängig von mechanischen Belastungen während des Prozesses und während der späteren Anwendung konstant bleibt.

Weiterhin ist es Aufgabe der Erfindung, einen Elektrolyten bereitzustellen, der einfach im Herstellungsprozess durch Lamination auf die erste Halbzelle aufgebracht werden kann und durch Lamination mit der zweiten Halbzelle verbunden werden kann.

Die Aufgabe wird gelöst durch einen haftklebrigen Polymerelektrolyt mit den Merkmalen des Anspruchs 1, d.h. durch einen haftklebrigen Polymerelektrolyt mit einer Klebkraft gemäß dem in der Beschreibung beschriebenen Test A von mehr als 1 N/cm und einer Ionenleitfähigkeit gemäß dem in der Beschreibung beschriebenen Test B von mehr als $10^{-6}$ $(Ohm*cm)^{-1}$, d.h. $10^{-6}$ S/cm, hergestellt durch Polymerisation eines Gemisches, das mindestens folgende Komponenten umfasst:

- 5 - 60 Gew.-%, vorzugsweise 10 - 50 Gew.-%, bevorzugter 10 - 40 Gew.-%, insbesondere 15 - 30 Gew.-%, Acrylatmonomer aus der Gruppe der (Meth)Acrylsäureester mit 4 - 15 Kohlenstoffatomen, wobei sich die Zahl der Kohlenstoffatome jeweils auf das gesamte Molekül, das heißt auf Säurekomponente und Alkoholkomponente zusammen, bezieht und das Acrylatmonomer als Homopolymer, d.h. homopolymerisiert, einen $T_g$ gemäß dem in der Beschreibung beschriebenen Test C von weniger als -30 °C aufweisen würde,
- 10 - 80 Gew.-%, vorzugsweise 35 - 75 Gew.-%, bevorzugter 40 - 70 Gew.-%, insbesondere 50 - 70 Gew.-%, Acrylatmonomer aus der Gruppe der (Meth)Acrylsäureester mit 4 - 25 Kohlenstoffatomen und enthaltend mindestens ein Heteroatom, wobei sich die Zahl der Kohlenstoffatome jeweils auf das gesamte Molekül, das heißt auf Säurekomponente und Alkoholkomponente zusammen, bezieht, das Heteroatom zusätzlich zu den beiden O-Atomen der Esterfunktionalität vorliegt und das Acrylatmonomer als Homopolymer, d.h. homopolymerisiert, einen $T_g$ gemäß dem in der Beschreibung beschriebenen Test C von weniger als +100 °C aufweisen würde,
- 0,05 - 10 Gew.-%, vorzugsweise 0,1 - 2 Gew.-%, insbesondere 0,1 - 0,5 Gew.-%, Initiator, wobei der Initiator vorzugsweise thermischer Initiator und/oder Photoinitiator ist, besonders bevorzugt Photoinitiator,
- 2 - 13 Gew.-%, vorzugsweise 3 - 10 Gew.-%, insbesondere 4 - 8 Gew.-%, Leitsalz,
- optional Weichmacher, wie zum Beispiel 5 bis 50 Gew.-%, vorzugsweise 10 bis 30 Gew.-% und insbesondere 15 bis 25 Gew.-% Weichmacher,
- und optional Lösungsmittel, das typischerweise nach der Polymerisation zumindest teilweise, wie zum Beispiel im Wesentlichen vollständig, entfernt wird,

wobei optional ein oder mehrere der Komponenten zumindest anteilig, wie zum Beispiel vollständig, erst während oder nach der Polymerisation zugegeben werden.

Bevorzugte Ausführungsformen des Polymerelektrolyten finden sich außerdem in den abhängigen Ansprüchen.

Gemäß der vorliegenden Anmeldung gelten nur solche Lösungsmittel (Verbindungen) als Lösungsmittel, die bei Atmosphärendruck, d.h. 1013 mbar, einen Siedepunkt von weniger als 100 °C aufweisen. Lösungsmittel mit einem Siedepunkt bei 1013 mbar von 100 °C oder mehr und Lösungsmittel, die bei 1013 mbar keinen Siedepunkt haben sondern sich bei 100 °C oder mehr zersetzen, gelten im Sinne der vorliegenden Anmeldung dagegen als Weichmacher. Das Lösungsmittel ist erfindungsgemäß bei der Angabe der Gewichtsanteile der Komponenten nicht berücksichtigt, Weichmacher wie zum Beispiel Ethylencarbonat (EC) oder Diethylcarbonat (DEC) dagegen schon. Falls bei der erfindungsgemäßen Polymerisation Lösungsmittel im Sinne der vorliegenden Anmeldung eingesetzt wird, wird dieses nach der Polymerisation vorzugsweise im Wesentlichen entfernt, insbesondere weil das Lösungsmittel aufgrund des niedrigen Siedepunktes die Stabilität des Elektrolyten und der späteren elektrochemischen Zelle negativ beeinflussen kann.

Optional erst während oder nach der Polymerisation zugegebene Komponenten sind in den angegebenen Gewichtsanteilen selbstverständlich bereits inkludiert.

Der Begriff "(Meth)Acrylsäureester" umfasst gemäß der vorliegenden Erfindung sowohl Methacrylsäureester, als auch Acrylsäureester. Die Zahl der Kohlenstoffatome der (Meth)Acrylsäureester bezieht sich zudem jeweils auf das ganze Molekül, d.h. die Säurekomponente und Alkoholkomponente zusammen.

Im Acrylatmonomer aus der Gruppe der (Meth)Acrylsäureester mit 4 - 25 Kohlenstoffatomen und enthaltend mindestens ein Heteroatom, das als Homopolymer einen $T_g$ gemäß Test C von weniger als +100 °C aufweisen würde, ist das Heteroatom vorzugsweise O, S oder N, bevorzugter O oder N und insbesondere O. Dem Fachmann ist klar, dass in dem Acrylatmonomer das mindestens eine Heteroatom zusätzlich zu den beiden O-Atomen (Sauerstoffatomen) der Esterfunktionalität, d.h. (C=O)O, vorliegt. Das mindestens eine Heteroatom ist typischerweise im Kohlenwasserstoffrest der Alkoholkomponente des (Meth)Acrylsäureesters enthalten.

Das Acrylatmonomer aus der Gruppe der (Meth)Acrylsäureester mit 4 - 15 Kohlenstoffatomen, das als Homopolymer einen $T_g$ gemäß Test C von weniger als -30 °C aufweisen würde, enthält vorzugsweise, abgesehen von den beiden O-Atomen der Esterfunktionalität, kein Heteroatom.

Das Acrylatmonomer aus der Gruppe der (Meth)Acrylsäureester mit 4 - 25 Kohlenstoffatomen und enthaltend mindestens ein Heteroatom, das als Homopolymer einen $T_g$ gemäß Test C von weniger als 100 °C aufweisen würde, besteht vorzugsweise zumindest anteilig aus Acrylatmonomer, das als Homopolymer einen $T_g$ gemäß Test C von mindestens -30 °C, insbesondere mindestens 0°C, aufweisen würde. Dies wirkt sich typischerweise vorteilhaft auf mehrere Eigenschaften des haftklebrigen Elektrolyten wie die Kohäsion, Scherstandszeit und Wärmebeständigkeit aus. In einer bevorzugten Ausführungsform umfasst das zu polymerisierende Gemisch 15 bis 50 Gew.-%, vorzugsweise 25 bis 40 Gew.-%, Acrylatmonomer aus der Gruppe der (Meth)Acrylsäureester mit 4 - 25 Kohlenstoffatomen und enthaltend mindestens ein Heteroatom, das als Homopolymer einen $T_g$ gemäß Test C von -30 °C bis weniger als +100 °C, vorzugsweise 0 °C bis 50 °C, aufweist.

Beim Acrylatmonomer aus der Gruppe der (Meth)Acrylsäureester mit 4 - 15 Kohlenstoffatomen, das als Homopolymer einen $T_g$ gemäß Test C von weniger als -30 °C aufweisen würde, kann es sich um ein oder mehrere Monomere handeln. Gleiches gilt für das Acrylatmonomer aus der Gruppe der (Meth)Acrylsäureester mit 4 - 25 Kohlenstoffatomen und enthaltend mindestens ein Heteroatom, das als Homopolymer einen $T_g$ gemäß Test C von weniger als 100 °C aufweisen würde. Durch die Auswahl geeigneter zu polymerisierender Acrylatmonomere und deren Menge lassen sich zudem Eigenschaften wie die Glasübergangstemperatur $T_g$ und die Polarität des haftklebrigen Polymerelektrolyten gezielt einstellen.

Die Glasübergangstemperaturen $T_g$ der genannten Homopolymere beziehen sich typischerweise jeweils auf ein unendliches Molekulargewicht, d.h. mit $T_g$ ist bezüglich der Homopolymere typischerweise jeweils $T_g^\infty$ gemeint. Der Fachmann weiß, dass niedrige Molekulargewichte die Kettenbeweglichkeit erhöhen und damit den $T_g$ absenken. Es gilt die empirische Regel

$$T_g = T_g^\infty - \frac{K}{M}$$

worin $T_g$ die Glastemperatur eines Polymers beim zahlenmittleren Molekulargewicht M, d.h. $M_n$, ist, K ein vom Polymertyp abhängiger konstanter Faktor ist und $T_g^\infty$ die Glasübergangstemperatur des Polymers bei unendlichem Molekulargewicht ist (siehe Bernd Tieke: "Makromolekulare Chemie - eine Einführung", VCH-Verlag, 2004, S. 270 f.). Trägt man also bei einem bestimmten Polymer für verschiedene zahlenmittlere Molekulargewichte M jeweils die gemessenen $T_g$-Werte gegen K/M auf, so ergibt sich $T_g^\infty$ als Y-Achsenabschnitt.

Der erfindungsgemäße haftklebrige Polymerelektrolyt ist vorzugsweise gekennzeichnet durch eine oxidative Stabilität gemäß Test I von mehr als 2,5 V.

In einer weiteren Ausführungsform ist der erfindungsgemäße haftklebrige Polymerelektrolyt dadurch gekennzeichnet, dass das Polymer der Polymermatrix eine relative Permittivität $\varepsilon_r$ gemäß Test J von mehr als 3,5, vorzugsweise mehr als 4,5 besitzt.

Der erfindungsgemäße Elektrolyt kann in Batterien eingesetzt werden, aber auch in transparenten elektrochromen Systemen zum Einsatz kommen, da der erfindungsgemäße Elektrolyt nur geringe Alterungserscheinungen aufweist, also lange Zeit chemisch stabil bleibt, und auch bei Außenanwendung über Jahre hinweg eine stabile und witterungsbeständige Verklebung ermöglicht und dabei seine transparenten hochwertigen optischen Eigenschaften beibehält. Diese Stabilität ist möglich, weil Monomere, Leitsalze und, sofern eingesetzt, Weichmacher gefunden werden konnten, die in der erfindungsgemäßen Kombination nicht mit UV Licht interagieren und zu Zersetzungsreaktionen neigen.

Die Aufgabe wird zudem gelöst durch ein Verfahren zur Herstellung des erfindungsgemäßen haftklebrigen Polymerelektrolyten. Gemäß dem Verfahren wird ein Gemisch polymerisiert, das mindestens folgende Komponenten umfasst:

- 5 - 60 Gew.-%, vorzugsweise 10 - 50 Gew.-%, bevorzugter 10 - 40 Gew.-%, insbesondere 15 - 30 Gew.-%, Acrylatmonomer aus der Gruppe der (Meth)Acrylsäureester mit 4 - 15 Kohlenstoffatomen, das als Homopolymer einen $T_g$ gemäß Test C von weniger als -30 °C aufweisen würde,
- 10 - 80 Gew.-%, vorzugsweise 35 - 75 Gew.-%, bevorzugter 40 - 70 Gew.-%, insbesondere 50 - 70 Gew.-%, Acrylatmonomer aus der Gruppe der (Meth)Acrylsäureester mit 4 - 25 Kohlenstoffatomen und enthaltend mindestens ein Heteroatom, das als Homopolymer einen $T_g$ gemäß Test C von weniger als 100 °C aufweisen würde,
- 0,05 - 10 Gew.-%, vorzugsweise 0,1 - 2 Gew.-%, insbesondere 0,1 - 0,5 Gew.-%, Initiator, wobei der Initiator vorzugsweise thermischer Initiator und/oder Photoinitiator ist, besonders bevorzugt Photoinitiator,
- 2 - 13 Gew.-%, vorzugsweise 3 - 10 Gew.-%, insbesondere 4 - 8 Gew.-%, Leitsalz,
- optional Weichmacher, wie zum Beispiel 5 bis 50 Gew.-%, vorzugsweise 10 bis 30 Gew.-% und insbesondere 15 bis 25 Gew.-% Weichmacher,

- und optional Lösungsmittel, das typischerweise nach der Polymerisation zumindest teilweise, wie zum Beispiel im Wesentlichen vollständig, entfernt wird,

wobei optional ein oder mehrere der Komponenten zumindest anteilig, wie zum Beispiel vollständig, erst während oder nach der Polymerisation zugegeben werden.

Das Lösungsmittel ist erfindungsgemäß bei der Angabe der Gewichtsanteile der Komponenten nicht berücksichtigt.

Die Erfindung betrifft zudem ein Haftklebeband enthaltend mindestens eine Schicht des erfindungsgemäßen haftklebrigen Polymerelektrolyten, wobei das Haftklebeband vorzugsweise doppelseitig klebend ist, d.h. ein doppelseitiges Klebeband ist, und insbesondere ein Transferklebeband ist. Der allgemeine Ausdruck "Klebestreifen" (Haftklebesteifen), synonym auch "Klebeband" (Haftklebeband), umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten. Das Haftklebeband weist somit eine Längsausdehnung (x-Richtung) und eine Breitenausdehnung (y-Richtung) auf. Das Haftklebeband weist auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung des Haftklebebands möglichst gleich, vorzugsweise exakt gleich. Das erfindungsgemäße Haftklebeband liegt insbesondere in Bahnform vor. Unter einer Bahn wird ein Objekt verstanden, dessen Länge (Erstreckung in x-Richtung) um ein Vielfaches größer ist als die Breite (Erstreckung in y-Richtung) und die Breite entlang der gesamten Länge in etwa vorzugsweise genau gleichbleibend ausgebildet ist. Vorteilhaft können die frei liegenden Flächen des Haftklebebebands mit beidseitig antiadhäsiv beschichteten Materialien ausgerüstet sein wie ein Trennpapier oder eine Trennfolie, auch Liner genannt, und zwar als temporärer Träger. Ein Liner (Trennpapier, Trennfolie) ist nicht Bestandteil eines Haftklebebands, sondern nur ein Hilfsmittel zu dessen Herstellung, Lagerung und/oder für die Weiterverarbeitung durch Stanzen. Darüber hinaus ist ein Liner im Gegensatz zu einem Klebebandträger nicht fest mit einer Klebstoffschicht verbunden. Vorzugsweise besteht das Haftklebeband aus einer einzigen Schicht des erfindungsgemäßen haftklebrigen Polymerelektrolyten, so dass das Haftklebeband ein Einschichtsystem darstellt. Ein solches einschichtiges, beidseitig selbstklebendes, d.h. haftklebriges Klebeband, d.h. doppelseitiges Klebeband, wird auch als "Transfertape" bezeichnet.

Die Erfindung betrifft zudem eine Produktrolle umfassend (a) einen Rollenkern und (b) einen erfindungsgemäßen bahnförmig geformten haftklebrigen Polymerelektrolyt oder ein erfindungsgemäßes Haftklebeband, wobei der haftklebrige Polymerelektrolyt oder das Haftklebeband in Form einer archimedischen Spirale mehrlagig auf den Rollenkern aufgewickelt ist.

Die Erfindung betrifft zudem die Verwendung des erfindungsgemäßen haftklebrigen Polymerelektrolyts oder Haftklebebands in einer elektrochromen Verglasung oder einer Batterie.

Ein weiterer Gegenstand der Erfindung ist elektrochromes System umfassend eine erste Halbzelle A und eine zweite Halbzelle B, wobei die beiden Halbzellen A und B über einen erfindungsgemäßen haftklebrigen Polymerelektrolyten oder ein erfindungsgemäßes Haftklebeband vollflächig oder teilflächig miteinander verbunden sind, wobei vorzugsweise mdie erste Halbzelle A einen flächigen elektrisch leitfähig beschichteten Polymer- oder Glassubsttratkörper aufweist und auf der leitfähig beschichteten Seite ein vollflächig oder partiell aufgetragenes Anodenmaterial aufgebracht ist, und die zweite Halbzelle B ebenfalls einen flächigen und elektrisch leitfähig beschichteten Polymer- oder Glassubstratkörper aufweist und auf der elektrisch leitfähig beschichteten Seite ein vollflächig oder partiell aufgetragenes Kathodenmaterial aufgebracht ist.

Weiterhin betrifft die Erfindung ein Verfahren zur Herstellung eines elektrochromen Systems, bei dem eine erste Halbzelle A und eine zweite Halbzelle B durch Auflaminieren eines erfindungsgemäßen haftklebrigen Polymerelektrolyts oder eines erfindungsgemäßen Haftklebebands miteinander zu einem elektrochromen System verbunden werden, wobei die Halbzellen A und B vorzugsweise wie vorstehend definiert sind.

Weiterhin betrifft die Erfindung auch allgemein Aufbauten und Verfahren zum Aufbau von elektrochemische Zellen wie oben beschrieben, wobei zwei Halbzellen durch den erfindungsgemäßen Elektrolyten gefügt werden. Diese elektrochemischen Zellen werden auch als Batterie bezeichnet, wenn elektrische Energie gespeichert und abgegeben werden soll. In diesem Fall sind die Halbzellen A und B darauf hin optimiert, eine hohe Menge des Kations aufnehmen zu können. Als Anodenmaterial eignen sich beispielsweise Graphitformulierungen oder metallisches Lithium, das auf einer in diesem Fall nicht zwangsläufig transparenten leitfähigen Elektrode aufgetragen ist. Als Kathodenmaterial eignet sich beispielsweise eine Formulierung aus Lithiumeisenphosphat, die mit geringen Mengen Graphit und Polyvinylidenfluorid/Polyhexafluoropropylen-Gemisch (Binder) versetzt ist. Diverse Anoden- und Kathodenmaterialien für die Zellenfertigung sind dem Fachmann breitläufig bekannt.

Für eine optimale Leistungsfähigkeit muss die haftklebrige Elektrolytpolymermatrix eine möglichst hohe Permittivität aufweisen, damit diese die darin enthaltenen Leitsalze in ausreichend hoher Konzentration lösen kann. Insbesondere die Kationen müssen hierzu mobil und dissoziiert vorliegen, während die dazugehörigen Anionen von der Polymermatrix immobilisiert werden können. Auch eine niedrige Viskosität, auch bei niedrigen Temperaturen, ist für die Mobilität der Kationen vorteilhaft. Leider haben sich haftklebrige Polymersysteme mit einer hohen Permittivität als wenig viskos erwiesen und aufgrund der hohen Glasübergangstemperatur liegt die typische Verwendungstemperatur nahe an oder sogar unterhalb der Glasübergangstemperatur, was für die Mobilität der Ionen ungünstig ist. Überraschenderweise hat sich jedoch gezeigt, dass trotz des hohen Glasüberganspunktes die Ionenleitfähigkeit erfindungsgemäßer Haftklebemassen hohe Werte annehmen kann.

Erfindungsgemäße Elektrolyte sind selbstklebrig, d.h. haftklebrig und haben bereits vor Aushärtung, bzw. ohne Aushärtung eine feste Struktur mit einer definierten Dicke und können direkt in einem einfachen Prozessschritt durch einfache Lamination mit den Halbzellenkomponenten gefügt werden. Die Komplexität des Gesamtsystems sinkt, wenn eine nach dem Zusammenbringen der Halbzellen erforderliche Aushärtung entfällt. Die Abwesenheit chemisch aktiver Komponenten eliminiert das Risiko von unerwünschten Nebenreaktionen mit aktiven Komponenten anderer Halbzellenaktivmaterialien.

Der erfindungsgemäße Elektrolyt ist haftklebrig, d.h. stellt eine Haftklebemasse dar - sowohl als chemisch inertes System, das keiner weiteren Aushärtung bedarf, als auch als Reaktionshaftklebemasse, deren Lamination ein Aushärtungsprozess angeschlossen werden kann.

Unter einer Haftklebmasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im Allgemeinen, grundsätzlich jedoch abhängig von der genauen Art des Haftklebstoffs sowie des Substrats, der Temperatur und der Luftfeuchtigkeit, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebmassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligenAnteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, häufig hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Adhäsion. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma)$ •cos($\delta$) ($\tau$ = Schubspannung, $\gamma$ = Deformation, $\delta$ = Phasenwinkel = Phasenverschiebung zwischen Schubspannungs- und Deformationsvektor). Die Definition des Ver-lustmoduls G" lautet: G' = $(\tau/\gamma)$ • sin($\delta$) ($\tau$ = Schubspannung, $\gamma$ = Deformation, $\delta$ = Phasenwinkel = Phasenverschiebung zwischen Schubspannungs- und Deformationsvektor).

Eine Masse gilt insbesondere dann als Haftklebmasse und wird im Sinne der Erfindung insbesondere dann als solche definiert, wenn bei 23 °C im Deformationsfrequenzbereich von $10^0$ bis $10^1$ rad/sec sowohl G' als auch G" zumindest zum Teil im Bereich von $10^3$ bis $10^7$ Pa liegen. "Zum Teil" heißt, dass zumindest ein Abschnitt der G'-Kurve innerhalb des Fensters liegt, das durch den Deformationsfrequenzbereich von einschließlich $10^0$ bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb des entsprechenden Fensters liegt.

Photoinitiatoren und Vernetzer:

Das erfindungsgemäß zu polymerisierende Gemisch, aus dem der haftklebrige Polymerelektrolyt gemäß der vorliegenden Erfindung hervorgeht, enthält 0,05 - 10 Gew.-%, vorzugsweise 0,1 - 2 Gew.-%, insbesondere 0,1 - 0,5 Gew.-% Initiator, vorzugsweise thermischen Initiator und/oder Photoinitiator, besonders bevorzugt Photoinitiator. Beim Photoinitiator handelt es sich typischerweise um UV-Initiator. Dementsprechend ist die erfindungsgemäß stattfindende Polymerisation vorzugsweise eine UV-Polymerisation. Falls ein Gemisch mehrerer Initiatoren eingesetzt wird, beziehen sich die vorstehenden Gewichtsanteile typischerweise auf die Gesamtmenge der Initiatoren. Der erfindungsgemäß eingesetzte Initiator ist vorzugsweise ein Initiator, der eine radikalische Polymerisation initiiert. Dementsprechend ist die erfindungsgemäß stattfindende Polymerisation vorzugsweise eine radikalische Polymerisation.

Die UV-Polymerisation zur Sirupherstellung als auch auf der ausgestrichenen Bahn kann beispielsweise mit folgenden Photoinitiatoren, d.h. lichtaktiven Initiatoren erfolgen: 2,2-Dimethoxy-2-phenylacetophenon (DMPA, 340 nm, 250 nm), 2,4,6-Trimethylbenzoyldiphenylphosphinoxid (BAPO, 295 nm, 370 nm), Iodonium-(4-Methylphenyl)[4-(2-methylpropyl)phenyl]-hexafluorophosphat (242 nm), (2,2'-Bithiophen-5-yl)(4-(N,N'-diethylaminophenyl)keton (THBP), 6,6"-(((1E, 1'E)-(2,5-bis(octlyoxy)-1,4-phenylen)bis(ethen-2,1-diyl))bis(4,1-phenylen))bis(1,3,5-triamin-2,4-diamin)) (400 nm). Neben den genannten Initiatoren können weitere bekannte Initiatoren folgender Klassen verwendet werden: Alphaaminoketone, Metallocene, Iodoniumsalze, Alphahydroxyketone, oder Phosphine. Vorzugsweise besteht eine thermische Stabilität bis mindestens 50 °C.

Je nach Energie der bei der Initiatorfission entstehenden Radikale können diese auf die Initiierung der Acrylatpolymerisation beschränkt sein oder zusätzlich auch Vernetzungsreaktionen bewirken, wie z.B. 2-(4-Methoxyphenyl)-4,6-bis(trichloromethyl)-1,3,5-trianzin (MTT). Während der Lösungsmittelpolymerisation oder Sirup-Herstellung ist eine Vernetzung der Ketten unerwünscht, um die Viskositäten für die Beschichtung niedrig zu halten. Bei der UV-Polymerisation können im zweiten Polymerisationsschritt quervernetzende photoaktive Vernetzer hinzugegeben werden. Diese können auch wahlweise in die Ketten einpolymerisiert werden. Bei der Verwendung von 2-Oxo-1,2-Diphenylethylacrylat (Benzoinacrylat) oder deren Analoga werden nach Polymerisation im UV-Kanal bei einer Wellenlänge zwischen 300 und 400 nm Polymere erhalten, die nach dem Ende der Polymerisation im UV-Kanal kurz und intensiv mit UV-Strahlung bei 250 nm vernetzt werden können, indem die einpolymerisierten Benzoinacrylat-Bausteine aktiviert werden. Genauso können diese Vernetzer während einer thermisch initiierten Lösungsmittelpolymerisation einpolymerisiert werden und später nach der Trocknung mit UV-Strahlung aktiviert werden. Wesentlich ist die Vernetzung ohne die Verwendung protischer funktioneller Gruppen, um erfindungsgemäße haftklebrige Elektrolyte herzustellen, damit die elektrochemische und chemische Stabilität gegenüber der in der Zelle verwendeten Aktivmaterialien gewährleistet ist.

Auch Benzophenonmethacrylat (Visiomer 6976, 300 nm) und deren Analoga können mit deren bekannten Vor- und Nachteilen verwendet werden. Diese Initiatoren reduzieren die Kontamination mit kleinen Molekülen, benötigen jedoch aufgrund der bimolekularen Reaktion mehr Zeit zum Reagieren. Die Vernetzung muss unter inerten Bedingungen stattfinden.

Neben den propfenden Initiatoren kann die Polymermatrix auch mit vernetzenden multifunktionalen Acrylaten, d.h. Molekülen, die mehr als eine Acrylatgruppe besitzen, vernetzt werden. Dazu eignen sich beispielsweise Hexandioldiacrylat (HDDA), ethoxyliertes Trimethylolpropantriacrylat (ETPTA), 1,9-Nonandioldimethacrylat, 1,6-Hexandioldimethacrylat, Di(trimethylolpropan)tetraacrylat, Di(ethylenglycol)diacrylat (Di(EG)DA), Bis(2-methacryloxyethylphosphat, Di(ethylenglycol)timethacrylat (Di(EG)DM), Bisphenol A-bis(2-hydroxypropyl)acrylat, Ethylenglycoldimethacrylat (EGDM), Dipropylenglycoldiacrylat, trans-1,4-Cyclohexandioldimethacrylat, (Di(PG)DA), 1,3-Glyceryldimethacrylat, 1,10-Decandioldimethacrylat, Dipropylenglycoldimethacrylat (Di(PG)DM), 1,4-Diacryloylpiperazin, Ethylenglycoldivinylether (EGDVE), Diethylenglycoldiacrylat, Diethylenglycoldivinylether (Di(EG)DVE), Diethylenglycoldimethacrylat, Triethylenglycoldimethacrylat (Tri(EG)DM), Ethylenglycoldiacrylat, Dipentaerythritolpentaacrylat (DPentA), Trimethylolpropantriacrylat (TMPTA), Trimethylolpropantriacrylat (PO3-TMPTA), propoxyliertes Trimethylolpropantriacrylat (PO6-TMPTA), Poly(ethylenglycol)diacrylat (PAI) und Polyethylenglycoltimethacrylat.

Solange im Endprodukt alle funktionellen Gruppen umgesetzt werden, können auch protische Gruppen für die Vernetzung eingesetzt werden. Dann eignen sich auch folgende Vernetzer bzw. Vernetzungssysteme: Isocyanatvernetzer, Epoxy-basierte Vernetzer, Melamin-basierte Vernetzer, Peroxid-basierte Vernetzer, Metallchelat-basierte Vernetzer, Metallsalz-basierte Vernetzer, Carbodiimid basierte Vernetzer, Oxazolin-basierte Vernetzer, Aziridin-basierte Vernetzer Amin-basierte Vernetzer oder Silan-basierte Vernetzer. Die Kombination verschiedener Vernetzer ist ebenfalls möglich. Als entsprechende Monomere können beispielsweise folgende eingesetzt werden: 2-Hydroxyethylacryalt. 2-Hydroxypropylacrylat, 2-Hydroxybutylacrylat, 2-Hydroxyethylmethacrylat, 2-Hydroxypropylmethacrylat, 2-Hydroxybutylmethacrylat, 2-Hydroxyethylacrylamid, N-Hydroxypropylacrylamid. Neben Hydroxymonomeren mit Acrylamidgruppen können auch Hydroxymonomere mit Ethylyenglykoleinheiten eingesetzt werden. Ein Beispiel hierfür ist hydroxyterminiertes Propylenglykolacrylat. Die Gruppen können ebenfalls Carbonsäuregruppen, Carbonsäureanhydridgruppen, Amidgruppen, Aminogruppen, Urethangruppen oder Harnstoffeinheiten sein. Sofern zwei oder mehr dieser funktionellen Gruppen vorhanden sind, können sie identisch sein oder unabhängig voneinander aus den genannten funktionellen Gruppen gewählt sein. Erfindungsgemäß sehr geeignete Beispiele hierfür sind Acrylsäure oder Methacrylsäuren, N-Vinylcaprolactam, N-Vinylpyrrolidon, Acrylamid, Methacrylamid, N-Alkylacrylamid, wie z.B. N-Methylacrylamid, N-Alkyl-methacrylamide, wie z.B. N-Methylmethacrylamid, N,N-Dialkylacrylamide, wie z.B. N,N-Dimethylacrylamid, Diacetonacrylamid, N,N-alkylmethacrylamide, wie z.B. N, N-Dimethylmethacrylamid. Weitere Beispiele sind 4-Vinylpyridin, N-Vinylphthalimid, N-Vinylformamid. Weiterhin sehr geeignete Monomere sind Monomere mit (Poly)ethylenglykol-Segmenten, wobei zumindest zwei Ethylenglykoleinheiten im Monomer vorhanden sind. Die entsprechenden Monomere können insbesondere Hydroxy-terminiert und/oder methoxyliert sein.

Bei Verwendung von difunktionellen Vernetzern beträgt ihr Anteil in der Haftklebemasse typischerweise zwischen 0,2 und 10 Gew.-Teile, besonders bevorzugt zwischen 0,5 und 3 Gew.-Teile Vernetzer auf 100 Gew.-Teile der Polymerkomponente. Bei Einsatz trifunktioneller Vernetzer wird ihr Anteil bevorzugt zu 0,02 bis 5 Gew.-Teile auf 100 Gew.-Teile der Polymerkomponente hinzugegeben, besonders bevorzugt mit 0,05 bis 1 Gew.-Teilen. Es können aber auch Vernetzer mit höherer Funktionalität eingesetzt werden. Weiterhin können mehrere Vernetzer eingesetzt werden, die bezüglich ihrer Funktionalität gleich oder unterschiedlich sein können (zum Beispiel eine Kombination difunktioneller und trifunktioneller Vernetzer). Die eingesetzten Mengen sollten dann vorteilhaft angepasst werden.

Lösungsmittel:

Wie vorstehend beschrieben, gelten gemäß der vorliegenden Anmeldung nur solche Lösungsmittel (Verbindungen) als Lösungsmittel, die bei Atmosphärendruck, d.h. 1013 mbar, einen Siedepunkt von weniger als 100 °C aufweisen. Lösungsmittel mit einem Siedepunkt bei 1013 mbar von 100 °C oder mehr und Lösungsmittel, die bei 1013 mbar keinen Siedepunkt haben sondern sich bei 100 °C oder mehr zersetzen, gelten im Sinne der vorliegenden Anmeldung dagegen als Weichmacher.

Als Lösungsmittel für die Polymerisation der Polymermatrix des Elektrolyten oder als Hilfsmittel zur Abmischung der Polymermatrix mit weiteren Komponenten und Additiven kann beispielsweise trockenes Ethylacetat verwendet werden. Die elektrochemische Stabilität gegenüber Oxidation liegt zwischen der von Diethylcarbonat (DEC) und dem stabileren zyklischen Ethylencarbonat (EC) und lässt sich sehr schnell und mit wenig Energieaufwand trocknen. Die Anwesenheit von Ethylacetat verbessert zusätzlich die Tieftemperatureigenschaften bzgl. der Ionenleitung. Aber auch andere Lösungsmittel können verwendet werden, wie beispielsweise Acetonitril, 1,3-Dioxolan, Dimethoxyethan, Ketone oder Ethylenglycoldimethylether. Alle genannten Lösungsmittel können auch gleichzeitig als Lösungsmittel bei der Polymerisation, als auch als integraler Bestandteil des finalen Polymerelektrolyten sein.

Oft möchte man aber aus Sicherheitsaspekten (Geruch, Entflammbarkeit) keine leicht flüchtigen Lösungsmittel in dem Elektrolyten enthalten haben, insbesondere, wenn das elektrochemische System nicht wie bei Batterien üblich in Aluminiumgehäusen oder anders ausgeprägten stabilen Gehäusen verkapselt wird, sondern wie bei elektrochromen Systemen zwischen zwei Foliensubstraten. In diesem Fall kann das Lösungsmittel nach der Beschichtung des erfindungsgemäßen Elektrolyten durch Trocknung in einem Trockenkanal aus dem Elektrolyten entfernt werden. Alternativ kann ein lösungsmittelfreies Polymerisationsverfahren wie z.B. die UV-Sirup- Polymerisation verwendet werden, um die Polymermatrix herzustellen.

Sollte die Polymermatrix durch Polymerisation im Lösungsmittel hergestellt worden sein, so gibt es bekannte Verfahren, um gegebenenfalls das Polymer-Lösungsmittelgemisch zu trocknen oder aufzukonzentrieren, wie z.B. die Aufkonzentrierung im Extruder. Der Einfluss auf Nebenreaktionen durch Restlösungsmittel nach der Aufkonzentration oder Trocknung ist so begrenzt.

Weichmacher:

Der haftklebrige Polyelektrolyt kann Weichmacher enthalten, vorzugsweise in einem Anteil von 5 bis 50 Gew.-%, bevorzugter in einem Anteil von 10 bis 30 Gew.-%, wie insbesondere 15 bis 25 Gew.-%. Als Weichmacher können zum Beispiel zyklische Carbonate wie Ethylencarbonat (EC), Vinylencarbonat (VC), Propylencarbonat (PC), Butylencarbonat (BC) oder Fluorethylencarbonat (FEC), lineare Carbonate wie Dimethylcarbonat (DMC), Diethylcarbonat (DEC) oder Ethylmethylcarbonat (EMC), gemischte Carbonate, Dimethylacetamid, Ethylmethansulfonat (EMS), Gammabutyrolacton, Dimethylsulfoxid, "Glymes" wie Diglyme, Triglyme, Tetraglyme, Ethylenglycoldiacetat, Ketone, oder verschiedene Ether oder Polyether oder Mischungen davon eingesetzt werden. Besonders bevorzugt werden erfindungsgemäß Diethylcarbonat (DEC) und/oder Ethylencarbonat (EC) als Weichmacher eingesetzt. Besonders Dimethylacetamid kann beispielsweise eingesetzt werden, ohne die Löslichkeit des Leitsalzes signifikant herabzusetzen. Alle genannten Weichmacher können typischerweise auch gleichzeitig bei der Polymerisation die Löslichkeit verbessern, als auch als integraler Bestandteil des finalen Polymerelektrolyten fungieren.

Polymer:

Ziel der Erfindung ist es, einen haftklebrigen Elektrolyten bereitzustellen, d.h. eine Haftklebemasse, die durch Ionenleitung eine sehr gute Elektrolytfunktion hat. Haftklebemassen (PSA; englisch: "pressure sensitive adhesives") sind wie vorstehend beschrieben insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (einen sogenannten "Tack", d.h. Klebrigkeit oder Anfassklebrigkeit, aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück.

Haftklebemassen umfassen ein oder mehrere Polymere (im Rahmen dieser Schrift werden die Polymere gemeinsam als die "Polymerkomponente" der Haftklebemasse bezeichnet), bei denen es sich um Homopolymere und/oder Comonomere aus verschiedenen miteinander polymerisierbaren Monomeren handeln kann. Die Polymerkomponente kann an sich bereits haftklebrige Eigenschaften aufweisen, oder diese erst nach geeigneter Additivierung, beispielsweise durch Harze, bekommen.

Die Polymerkomponente kann grundsätzlich auf Grundlage von Polymeren unterschiedlicher chemischer Natur hergestellt werden. Die haftklebenden Eigenschaften können unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst werden. Zudem können bei der Polymerherstellung Vernetzer eingesetzt werden, typischerweise mit einem Anteil von 0,05 bis 5 Gew.-%, vorzugsweise 0,1 bis 3 Gew.-%.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweist.

Durch geeignete kohäsionssteigernde Maßnahmen, wie beispielsweise Vernetzungreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Erfindungsgemäß enthält der haftklebrige Polyelektrolyt mindestens ein Polyacrylat, d.h. Poly(meth)acrylat. Unter einem "Poly(meth)acrylat" wird ein Polymer verstanden, welches durch Polymerisation von Acryl- und/oder Methacrylmonomeren sowie gegebenenfalls weiteren, copolymerisierbaren Monomeren erhältlich ist. Typischerweise ist das Poly(meth)acrylat erfindungsgemäß durch Polymerisation von Acrylatmonomer aus der Gruppe der (Meth) Acrylsäureester mit 4 - 15 Kohlenstoffatomen, das als Homopolymer einen $T_g$ gemäß Test C von weniger als -30 °C aufweisen würde, Acrylatmonomer aus der Gruppe der (Meth)Acrylsäureester mit 4 - 25 Kohlenstoffatomen und enthaltend mindestens ein Heteroatom, das als Homopolymer einen $T_g$ gemäß Test C von weniger als 100 °C aufweisen würde, und gegebenenfalls weiterem Monomer hergestellt. Der Begriff "(Meth)Acrylsäureester" umfasst sowohl Methacrylsäureester, als auch Acrylsäureester. Die Polymerisation des Poly(meth)acrylats erfolgt insbesondere durch freie radikalische Polymerisation der eingesetzten Comonomere nach an sich bekannten Polymerisationsverfahren.

Zur Ermittlung der Glasübergangstemperatur von Copolymeren kann die Fox-Gleichung herangezogen werden (vgl. T.G. Fox, Bull. Am. Phys. Soc. 1 (1956) S. 123), die besagt, dass die reziproke Glasübergangstemperatur $T_G$ (K) des Copolymers, d.h. $1/T_G$, sich über die Gewichtsanteile der eingesetzten Comonomere und die Glasübergangstemperaturen der korrespondierenden Homopolymere der Comonomere berechnen lässt:

$$\frac{1}{T_G} = \frac{w_1}{T_{G,1}} + \frac{w_2}{T_{G,2}}$$

wobei $w_1$ und $w_2$ den Massenanteil des jeweiligen Monomers 1 bzw. 2 (Gew.-%) und $T_{G,1}$ und $T_{G,2}$ die jeweilige Glasübergangstemperatur des Homopolymers aus den jeweiligen Monomeren 1 bzw. 2 in Kelvin (K) repräsentieren.

Die Gleichung ist im Falle von mehr als zwei Comonomeren verallgemeinerbar auf

$$\frac{1}{T_G} = \sum_n \frac{w_n}{T_{G,n}}$$

In der allgemeinen Gleichung repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Die Werte für die Glasübergangstemperaturen der korrespondierenden Homopolymere sind auch einschlägigen Nachschlagewerken entnehmbar.

Hochmolekulares Polyethylenoxid (PEO), dass mit Li-Salzen Komplexe bildet, ist eine der besten Polymermatrices (jedoch ist die oxidative elektrochemische Stabilität auf 3,8 V versus Li/Li$^+$ begrenzt, so dass eine Batterie maximal bis 3V operieren kann). Aber auch Polymere auf Basis von Polyvinylchrorid (PVC) und Acrylaten sind sehr geeignet.

Poly(vinylidenfluorid/Trifluoroethylene) oder Poly(vinylidenfluorid/Hexafluorpropylen) im Blend mit Polyethylenoxid oder Polyethylenoxid/Polyacrylnitril (PEO/PAN)- Blends eignen sich ebenfalls. Acrylate mit Ethylenoxid (EO)-Einheiten in den Seitenketten weisen eine höhere elektrochemische Stabilität auf und können bis 4 V betrieben werden (z.B. LFP-Zelle). Weiterhin geeignet sind Copolymere aus Vinylchlorid, Acrylonitril, Methylmethacrylat, Ethylenoxid, Propylenoxid, Epichlorhydrin, Vinylidenchlorid, Vinylidenfluorid, Ethylensuccinat und Hexafluorpropylen. Copolymere aus Vinylidenfluorid und Hexafluorpropylen werden oft auch als Binder der Aktivmaterialien verwendet.

Für erfindungsgemäße haftklebrige Elektrolyten eignen sich insbesondere Polymere auf Basis von Acrylaten sehr gut, weil eine hohe Transparenz und Witterungsbeständigkeit erreicht werden können.

In bevorzugter Weise liegt das gewichtsmittlere Molekulargewicht $M_w$ des Polymers bzw. der Polymere der Polymerkomponente jeweils im Bereich von $200\,000 \leq M_w \leq 3\,000\,000$ g/mol. Angaben zum gewichtsmittleren Molekulargewicht $M_w$ bzw. zum zahlenmittleren Molekulargewicht $M_n$ von Polymeren (bzw. Oligomeren) beziehen sich in der vorliegenden Anmeldung wenn nicht anders angegeben jeweils auf die Bestimmung durch Gelpermeationschromatographie (GPC), unter den folgenden Bedingungen. Als Eluent wurde jeweils THF mit 0,1 Vol.-% Trifluoressigsäure eingesetzt. Die Messung erfolgte bei 25 °C. Als Vorsäule wurde PSS-SDV, 5 $\mu$, $10^3$ Å, ID 8,0 mm x 50 mm verwendet. Zur Auftrennung wurden die Säulen PSS-SDV, 5 $\mu$, $10^3$ Å, $10^5$ Å und $10^6$ Å mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen ($\mu = \mu$m; 1 Å = $10^{-10}$ m).

Die Polymere der Polymerkomponente basieren typischerweise zu mindestens 15 Gew.-%, wie zum Beispiel 15 bis 99 Gew.-%, auf ein oder mehreren Alkyl(meth)acrylatmonomeren, d.h. Alkyl(meth)acrylsäureestern, wobei der Alkylrest, d.h. die Alkoholkomponente, insbesondere 1 bis 25 Kohlenstoffatome aufweist. Typischerweise sind die eingesetzten Acrylatmonomere wie in Anspruch 1 definiert. Erfindungsgemäß können als Polymerkomponente alternativ oder zusätzlich zum Poly(meth)acrylat auch andere relativ polare Polymere eingesetzt werden, wie zum Beispiel speziell modifizierte Polyester, Polyurethane oder Polyurethanacrylate.

Der Kohlenwasserstoffrest der Alkoholkomponente der erfindungsgemäß bevorzugt eingesetzten Acrylatmonomere kann verzweigt oder unverzweigt oder cyclisch, gesättigt oder ungesättigt, aliphatisch oder aromatisch, substituiert oder unsubstituiert sein.

Der Kohlenwasserstoffrest der Alkoholkomponente der Acrylatmonomere kann insbesondere eine Alkyl- oder Alkenylgruppe sein mit 1 bis 14 Kohlenstoffatomen, insbesondere vorteilhaft sind Kohlenwasserstoffreste mit 4 bis 10 Kohlenstoffatomen. Vorteilhafte Beispiele für Acrylatmonomere sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere, wie z.B. Isobutylacrylat, 2-Ethylhexylacrylat, Isooctylacrylat, Methylacrylat, Methylmethacrylat, Ethylacrylat, n-Butylmethacrylat, n-Octylmethacrylat, 2-Ethylhexylmethacrylat, Isooctylmethacrylat, Cyclohexylmethacrylat, Isobornylacrylat, Isobornylmethacrylat, 2-Cyanoethylacrylat, 1,2 Diphenylethylmethacrylat, Diphenylmethylmethacrylat, ortho-Chlorbenzylmethacrylat, p-Bromphenylmethacrylat und 3,5-Dimethyladamantylacrylat.

Der in dieser Schrift erfindungsgemäß beschriebene haftklebrige Polymerelektrolyt ist zudem hervorragend geeignet, als optisch klare Verklebung in Anzeigeeinheiten elektronischer Geräte (Displays) eingesetzt zu werden, insbesondere als haftklebriger Polymerelektrolyt in Klebebändern, ganz besonders als haftklebriger Polymerelektrolyt in doppelseitigen Klebebändern. Dabei kann das doppelseitige Klebeband mit einem optisch durchlässigen Träger versehen sein oder es kann sich um ein trägerloses doppelseitiges Klebeband handeln. Besonders bevorzugt ist es, dass kein Träger eingesetzt wird, da dann ein Ionenaustausch im Elektrolyten ohne weiteres möglich ist. Sofern ein optisch transparenter Träger eingesetzt wird, muss dieser für die Ionen durchlässig sein. Damit eignen sie sich auch für elektrochrome Anwendungen für Fenster aller Art. Zu derartigen Trägern gehören auch transparente Papiere aus modifizierten Zellulosefasern.

Besonders vorteilhaft ist ein hoher Transmissions-Wert des haftklebrigen Elektrolyten bei 550 nm. Dies sorgt für die notwendige Lichtdurchlässigkeit in diesem Bereich. Der Lab-Farbraum ist ein Farbraum, der den Bereich der wahrnehmbaren Farben abdeckt (siehe DIN EN ISO 11664-4). Es wurde festgestellt, dass insbesondere der b\*-Wert mit dem wahrnehmbaren Grad der Vergilbung korreliert. b\*-Werte von mehr als 1 sind als Gelbfärbung wahrzunehmen. Entsprechend ist b\* erfindungsgemäß optimalerweise im Bereich von -1 < b\* <1. Jedoch ist auch der Wertebereich von -6 < b\* < 6 erfindungsgemäß noch als gut zu bezeichnen. Mit dem Begriff "Haze"(deutsch: Schleier") beschreibt man nach ASTM D1003-00 die Streuung von Licht durch einen Körper, angegeben als Prozentanteil des Lichtes, das mehr als in einem vorgegebenen Winkel abgelenkt wird. Bevorzugt wird ein Haze kleiner 5 %, besonders bevorzugt ein Haze < 2% wie zum Beispiel < 1 %, um die Sicht durch ein mit der erfindungsgemäßen Elektrolytschicht nicht zu beeinträchtigen. Überraschenderweise hat sich gezeigt, dass mit den erfindungsgemäßen haftklebrigen Elektrolytschichten derartige Klarheiten trotz hoher Leitsalzgehalte realisierbar sind.

Leitsalze:

Gängige Leitsalze wie Lithiumhexafluorophosphat, meist in einer Konzentration von 1 mol/l eingesetzt, können auch in erfindungsgemäßen haftklebrigen Elektrolyten eingesetzt werden. $LiClO_4$ ist auch in vielen Lösungsmitteln und Polymeren in hohen Konzentrationen löslich und besitzt große Anionen und eine hohe Dissoziationskonstante. 0.75 mol/l $LiClO_4$ können in 10 Gew.-% weichgemachten PMMA gelöst werden. Besonders vorteilhaft ist Lithiumbis(trifluoromethylsulfonyl)imid (LiTFSI) bezüglich seiner Feuchtigkeitsbeständigkeit. Grundsätzlich können aber auch andere Kationen wie z.B. $Na^+$, $K^+$, $Cs^+$, $Rb^+$, $Ag^+$, $Cu^+$, $Cu^{2+}$, $Mg^{2+}$ und andere Anionen wie z.B. $Cl^-$, $Br^-$, $I^-$, $ClO_4^-$, $SCN^-$, $AsF_6^-$, $CF_3SO_3^-$, $CH_3CO_2^-$, Bis(oxalato)borat (BOB), $BF_4^-$, $[PF_3(CF_2CF_3)_3]^-$ (FAP), Trifluoromethylbenzimidazol-Anion, Difluorooxalato-borat (FOB) und $C(CF_3SO_2)_3^-$ rein oder im Gemisch verwendet werden.

Additive:

Der Zusatz von Nanoteilchen zur Verhinderung der Kristallisationsneigung von Polymerelektrolyten, insbesondere von deren Polymer, kann vorteilhaft sein. Geeignete Füllstoffe, die zum Teil die Dielektrizitätskonstante des Polymerkomposites erhöhen, wie z.B. Bariumtitanat, sind beispielsweise $CeO_2$, $Er_2O_3$, ZnO oder Titandioxid. Sie verbessern die Ionendissoziation des Leitsalzes und stellen Diffusionskanäle für die Ionen bereit. Weitere Additive, zum Beispiel zur Stabilisierung der Zyklenfestigkeit, wie Cyclohexylbenzol, t-Amylbenzol, Adiponitril, 2-Propinylmethansulfonat, 1,3-Propansulfon oder Vinylencarbonat, können ebenfalls zugesetzt werden.

Um einer Vergilbung der leitfähigen Beschichtungen wie z.B. Indiumzinnoxid oder der anderen Aktivmaterialien vorzubeugen, kann der Elektrolyt mit UV-Schutzadditiven versehen werden, die neben dem UV-A- und UV-B-Bereich insbesondere im UV-C-Bereich absorbieren. Hierzu eignen sich beispielsweise 2-(2H-Benzotriazol-2-yl)derivate. Aber auch Ethandiamidderivate und Piperidinderivate können eingesetzt werden. In äußerst bevorzugter Vorgehensweise ist der Acrylatklebemasse der Haftklebemassenschicht zudem zumindest ein [3,5-Bis-(1,1-dimethylethyl-4-Hydroxyphenyl) methyl]alkylmalonat-Derivat zugegeben. Als vorteilhaft haben sich Anteile zwischen 0,2 und 4,0 Gew.-% Absorber erwiesen, wobei sehr dünne Schichten im Bereich kleiner 30 $\mu$m eher höhere Anteile an Absorber zwischen 2 - 4 Gew.-% aufweisen sollten, während dicke Elektrolytschichten um 200 $\mu$m Dicke mit 0,3 Gew.-% Absorber auskommen.

Ferner können zur Optimierung der klebtechnischen Eigenschaften den erfindungsgemäßen haftklebrigen Polymerelektrolyten, d.h. Haftklebemassen, Harze beigemischt werden. Als Harze im Sinne dieser Erfindung werden typischerweise oligo- und polymere Verbindungen mit einem zahlenmittleren Molekulargewicht $M_n$ von nicht mehr als 10.000 g/mol angesehen; diese werden nicht der Polymerkomponente zugerechnet. Als zuzusetzende klebrigmachende Harze (die Klebkraft steigende Harze, d.h. Klebharze) sind ausnahmslos alle vorbekannten und in der Literatur beschriebenen Klebharze einsetzbar. Genannt seien stellvertretend die Pinenharze, Indenharze und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$- bis $C_9$- sowie andere Kohlenwasserstoffharze. Beliebige Kombinationen dieser und weiterer Harze können eingesetzt werden, um die Eigenschaften der resultierenden Klebemasse wunschgemäß einzustellen. Im Allgemeinen lassen sich alle mit dem entsprechenden Basispolymer kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Auf die Anwesenheit von Klebharzen kann bei dem erfindungsgemäß typischerweise eingesetzten haftklebrigen Polymerelektrolyt auf Acrylatbasis verzichtet werden, so dass eine hervorragende Ausführungsvariante den erfindungsgemäßen haftklebrigen Elektrolyt darstellt, bei dem der Haftklebemasse keine Harze zugesetzt sind. Derartige Zusätze besitzen häufig nachteilige Auswirkungen bei der Anwendung für optische Verklebungen. Die gemäß dem Stand der Technik als Klebharze für Acrylathaftklebemassen eingesetzten Harze sind üblicherweise polarer Natur, um eine Verträglichkeit mit der Polyacrylatmatrix zu erreichen. Dies führt meist zu dem Einsatz von aromatischen Klebharzen, die sich bei längerer Lagerung oder unter Lichteinwirkung gelblich verfärben.

Produktdesign:

Bei dem erfindungsgemäßen Haftklebeband kann es sich vorzugsweise um einen doppelseitig klebend ausgerüsteten haftklebrigen Elektrolyten handeln. Der haftklebrige Elektrolyt kann eine oder mehrere optisch transparente Trägerschichten aufweisen, wobei zumindest eine der außenliegenden Klebemassenschichten, bevorzugt im Falle doppelseitig klebender trägerhaltiger Klebebänder beide außenliegenden Klebemassenschichten auf der vorstehend beschriebenen Polymerkomponente beruhen und insbesondere identisch sind. Im Falle eines doppelseitigen Klebebandes ist die mittlere Trägerschicht ebenfalls mindestens so gut ionenleitend wie die umgebenden Schichten des haftklebrigen Elektrolyts.

Insbesondere vorteilhaft sind doppelseitig klebende trägerlose Klebebänder, ganz besonders solche Klebebänder, die ausschließlich aus der wie erfindungsgemäß beschriebenen Schicht einer ionenleitfähigen Acrylathaftklebemasse gebildet werden.

Eine mögliche Ausführungsform des haftklebrigen Klebebandes kann auch als einseitiges Klebeband bereitgestellt werden, wobei bei dieser Ausführungsform der erfindungsgemäße Elektrolyt bereits auf einer Halbzelle verklebt ist und als Rollenmaterial vorliegt. Der Schichtaufbau beinhaltet in diesem Fall entweder die Komponenten Folienträger - leitfähige Beschichtung - Kathodenmaterial - Elektrolyt - Liner (optional) oder die Komponenten Folienträger - leitfähige Beschichtung - Anodenmaterial - Elektrolyt - Liner (optional) in der dargestellten Reihenfolge. Durch die Bereitstellung einer Halbzelle als Halbzeug, kann die Fertigung der Zellen delokalisiert werden, insbesondere weil das Halbzeug über einen langen Tranportweg stabil ist.

Das wie oben dargestellt erhältliche additivierte Polyacrylat wird zur Herstellung einer Haftklebemassenschicht ein- oder beidseitig auf einen optisch transparenten Träger aufgetragen, wobei ein permanenter Träger verwendet werden kann, der im Klebebandaufbau auch in der Anwendung erhalten bleibt. Insbesondere vorteilhaft werden aber trägerlose, insbesondere einschichtige Klebebänder erzeugt, die in einer sehr vorteilhaften Ausführungsform in der Anwendung aus der Haftklebemassenschicht allein bestehen (so genannte Transferklebebänder) und zur vorherigen Handhabung, Konfektionierung und Anbietung im Markt ein- oder beidseitig mit einem temporären Träger versehen sind, insbesondere zur Rolle gewickelt sind.

Zur Herstellung derartiger Transferklebebänder wird der wie oben dargestellt erhältliche haftklebrige Polyacrylatelektrolyt vorteilhaft auf einen temporären Träger (aus insbesondere antiadhäsiven und/oder antiadhäsiv ausgestatteten Materialien, so genannte Abdeckmaterialien, Trennmaterialien, Releasematerialien oder (Release-)Liner, wie beispielsweise silikonisierte Papiere, Folien oder dergleichen) in der gewünschten Schichtdicke beschichtet. Prinzipiell können hier alle für Polyacrylat-Haftklebemassen geeigneten Trennmaterialien eingesetzt werden. Besonders bevorzugt werden Release-Liner mit einem PET-Trägerkern eingesetzt.

Hergestellt werden können auch Klebebänder mit zwei (Haft-)Klebemassenschichten unterschiedlicher Art, von denen zumindest eine der Schichten eine wie im Rahmen dieser Schrift beschriebene (erfindungsgemäße) Haftklebemassenschicht ist. Die Haftklebemassenschichten können direkt aneinandergrenzen (Zwei-Schichten-Klebeband), zwischen den zwei Haftklebemassenschichten können optional auch eine oder mehrere weitere Schichten vorgesehen sein, wie beispielsweise Trägerschichten oder dergleichen (Mehrschichtenaufbau).

Verfahren zur Herstellung des Polymerelektrolyten:

Prinzipiell eignen sich insbesondere die Lösungsmittelpolymerisation und Lösungsmittelbeschichtung, die UV-Polymerisation und die Extrusion als mögliche Verfahren, erfindungsgemäße Haftklebemassen herzustellen.

Bei der Lösungsmittelpolymerisation wird das Polymer in Lösungsmittel hergestellt und Additive entweder bereits vor oder während der Polymerisation hinzugegeben oder auch nach der Polymerisation der Polymerlösung zugegeben. Anschließend wird die Polymerlösung auf eine Bahn von Trennpapier beschichtet und das Lösungsmittel teilweise oder vollständig durch Trocknen entfernt.

Bei der Extrusion erfolgt die Polymerisation auch im Lösungsmittel. Während der Polymerisation oder danach können einige oder alle Additive bereits hinzugegeben werden. Die Polymerlösung wird dann aufkonzentriert, um eine lösungsmittelarme oder lösungsmittelfreie hochviskose, aber unvernetzte Polymerschmelze zu bekommen, die im Anschluss weiter mit Additiven versehen werden kann oder direkt durch Extrusion durch eine Schlitzdüse oder durch Ausformung in einem Kalander auf ein Trennpapier oder ein anderes Substrat beschichtet werden kann. Die Aufkonzentration kann beispielsweise in einem Extruder erfolgen. Im gleichen Extruder oder in weiteren in Reihe geschalteten Extrudern können weitere Additive wie Leitsalze oder/und Vernetzer zu der Polymerschmelze gegeben werden. Nach Beschichtung erfolgt die Vernetzung beispielsweise thermisch oder photoinduziert, d.h. lichtinduziert.

Als besonders vorteilhaft hat sich die UV-Polymerisation erwiesen. Während der ausführlichen Untersuchungen hat sich herausgestellt, dass neben anderen Monomeren insbesondere das gut für erfindungsgemäße Elektrolyten geeignete 2-Cyanoethylacrylat aufgrund der niedrigen Reinheiten, die im Markt erhältlich sind, sehr schnell zur Vergelung neigt. Das Monomer enthält einen hohen Anteil unerwünschter Diacrylate, die zu einer unerwünschten Vernetzung bzw.

Vergelung führen. Bei der UV-Polymerisation in Masse wirkt sich dieser Effekt nicht negativ auf das optische Erscheinungsbild der Elektrolytenbahn aus. Der vernetzende und kohäsionssteigernde Effekt kann sogar vorteilhaft für erfindungsgemäße Elektrolyten ausgenutzt werden. So kann der zusätzliche Zusatz von photoaktiven Vernetzern oder multifunktionellen Acrylaten wie zum Beispiel Hexandioldiacrylat (HDDA) reduziert werden oder sogar ganz vermieden werden. 2-Cyanoethylacrylat wird somit, wie auch 2-(2-Ethoxyethoxy)ethylacrylat, bei der Herstellung des erfindungsgemäßen Polymerelektrolyts bevorzugt eingesetzt.

Nachfolgend wird die Erfindung durch einige Beispiele näher erläutert. Anhand der nachfolgend beschriebenen Beispiele werden besonders vorteilhafte Ausführungen der Erfindung näher erläutert, ohne damit die Erfindung unnötig einschränken zu wollen.

Beispiele:

In den Beispielen wurden folgende Rohstoffe eingesetzt:

(a) Acrylatmonomere:

- 2-Ethylhexylacrylat (EHA) der Firma BASF, das homopolymerisiert einen $T_g$ gemäß Test C von -50 °C aufweist.
- 2-(2-Ethoxyethoxy)ethylacrylat der Firma Polysciences, das homopolymerisiert einen $T_g$ gemäß Test C von -70 °C aufweist.
- 2-Cyanoethylacrylat (2-CEA, Bimax Bezeichnung BX-2-CEA) der Firma Bimax Speciality Polymers, das homopolymerisiert einen $T_g$ gemäß Test C von 4 °C aufweist.
- Glycidylmethacrylat der Firma Mitsubishi Gas Chemical Company, das homopolymerisiert einen $T_g$ gemäß Test C von 41 °C aufweist.

(b) Thermische Initiatoren:

- Vazo 67TM: 2,2'Azobis(2-methylbutyronitril) der Firma DuPont

(c) Photoinitiatoren:

- Benzoinethylether der Firma Sigma-Aldrich
- Lauroylperoxid (LPO) ($C_{24}H_{46}O_4$) der Firma Sigma-Aldrich, auch als thermischer Initiator geeignet

(d) Radikalfänger:

- Perkadox 16TM: Bis-(4-tert.-butylcyclohexyl)-peroxydicarbonat der Firma Akzo Nobel

(e) Vernetzer:

- Hexandioldiacrylat (HDDA) der Firma Polysciences
- Trimethylolpropantrimethacrylat (TMPTMA) ($C_{18}H_{26}O_6$) der Firma Polysciences
- 2-(4-Methoxyphenyl)-4,6-bis(trichloromethyl)-1,3,5-triazin (MTT) der Firma TCI Deutschland GmbH

(f) Leitsalze:

- Lithiumhexafluorophosphat (LiPF$_6$) der Firma Sigma-Aldrich
- Lithiumbis(trifluoromethylsulfonyl)imid (LiTFSI) der Firma Sigma-Aldrich
- Lithiumtetrafluoroborat (LiTFB) der Firma Sigma-Aldrich

(g) Lösungsmittel:

- Diethylether der Firma Sigma-Aldrich, Siedepunkt (1013 mbar): 35 °C
- Ethylacetat der Firma Sigma-Aldrich, Siedepunkt (1013 mbar): 77 °C

(h) Weichmacher:

- Ethylencarbonat (EC) der Firma Sigma-Aldrich, Siedepunkt (1013 mbar): kein Siedepunkt, sondern Zersetzung bei 248 °C (d.h. Zersetzungstemperatur = 248 °C)

- Diethylcarbonat (DEC) der Firma Sigma-Aldrich, Siedepunkt (1013 mbar): 126 bis 128 °C
- Ethylmethylcarbonat (EMC) der Firma Sigma-Aldrich, Siedepunkt (1013 mbar): 107 °C

(i) Additive:

- Acetylcystein (Kettenregler) der Firma Sigma-Aldrich
- Zinkchlorid (Katalysator) der Firma Sigma-Aldrich

Das folgende Beispiel 1 zeigt die Herstellung eines erfindungsgemäßen haftklebrigen Polyelektrolyten mittels Lösungsmittelpolymerisation. Die eingesetzten Komponenten ergänzen sich insgesamt zu 100 Gew.-%, wobei Lösungsmittel unberücksichtigt bleibt.

Beispiel 1 - Lösungsmittelpolymerisation:

Zur Herstellung eines erfindungsgemäßen haftklebrigen Polymers auf Cyanoethylacrylatbasis wurden in einem Glasreaktor mit einem Fassungsvolumen von 2 L 302 g einer Mischung von 3,53 Gew.-% Glycidylmethacrylat, 35,29 Gew.-% 2-Cyanoethylacrylat und 31,76 Gew.-% 2-Ethylhexylacrylat, 0,47 Gew.-% Acetylcystein, 10,59 Gew.-% EC und 10,59 Gew.-% DEC in 300 g Ethylacetat vorgelegt. Nach Entgasen der Reaktionslösung bei fünfundvierzigminütigem Hindurchleiten von Stickstoff unter Rühren wurde diese auf eine Temperatur von 58 °C erhitzt und 0,2 g (0,05 Gew.-%) 2,2'Azobis(2-methylbutyronitril) (Vazo 67TM der Firma DuPont) als Radikalstarter (Initiator) hinzugegeben. Nach der Zugabe wurde die Reaktionslösung auf eine Temperatur von 75 °C erhitzt und die Polymerisationsreaktion bei dieser Temperatur durchgeführt. Eine Stunde nach Beginn der Reaktion wurden der Reaktionsmischung weitere 0,2 g (0,05 Gew.-%) 2,2'Azobis(2-methylbutyronitril) hinzugefügt. Vier Stunden nach Beginn der Reaktion wurde die Reaktionsmischung mit 100 g Ethylacetat verdünnt. Weitere 100 g Ethylacetat wurden nach weiteren vier Stunden hinzugefügt (also acht Stunden nach Beginn der Reaktion). Zur Reduktion des restlichen in der Reaktionsmischung verbliebenen Radikalstarters wurden der Reaktionsmischung acht und zehn Stunden nach Beginn der Reaktion jeweils 0,6 g (0,14 Gew.-%) Bis-(4-tert.-butylcyclohexanyl)-peroxydicarbonat (Perkadox 16TM der Firma Akzo Nobel) hinzugegeben. Vierundzwanzig Stunden nach Beginn der Reaktion wurde die Polymerisationsreaktion durch Abkühlen der Reaktionsmischung auf Raumtemperatur (23 °C) beendet. Um aus dem so erhaltenen Polymer eine Klebemasse zu erzeugen, wurde das Reaktionsprodukt mit 15 g einer 10 Gew.-%-igen Lösung von Zinkchlorid in Diethylether abgemischt, entsprechend 0,35 Gew.-% Zinkchlorid. Zusätzlich wurden als Leitsalz 7,06 Gew.-% LiTFSI hinzugegeben und das Gemisch auf einer Trennfolie mit einem Kommarakel ausgestrichen (Dicke trocken: 30 $\mu$m) und getrocknet (40 m Kanal mit 8 Trockenzonen mit 30, 40, 40, 60, 90, 120, 120, 20 °C und einer Bahngeschwindigkeit von 15 m/min.). Im Trockner verdampft ein geringer Teil des Weichmachers (EC bzw. DEC), wobei nach dem Trocknen noch mehr als 80 Gew.-% der Weichmacher vorhanden sind.

Die folgenden Beispiele zeigen die Herstellung eines erfindungsgemäßen haftklebrigen Polyelektrolyten mittels UV-Polymerisation (Beispiele 2 bis 9) sowie eines ebenfalls durch UV-Polymerisation hergestellten Vergleichselektrolyten (Vergleichsbeispiel 10).

Beispiele 2 bis 9 - UV-Polymerisation:

Die Herstellung der vorzugsweise lösungsmittelfrei polymerisierten erfindungsgemäßen Elektrolyte erfolgte mit den nacheinander ablaufenden Schritten a) Präpolymerherstellung, d.h. Sirupherstellung, b) Formulierung des Präpolymers, d.h. Einarbeitung des Präpolymers bzw. Sirups in die finale Mischung, und c) Beschichtung und Härtung der finalen Mischung, wobei sich Härtung auf die Polymerisation bzw. Vernetzung bezieht. Alle Mengenangaben beziehen sich auf die finale Formulierung nach den Prozessschritten a) und b). Siehe die folgenden Details:

Beispiel 2:

Im Folgenden werden anhand von Beispiel 2 die einzelnen Schritte der Herstellung des haftklebrigen Polymerelektrolyten beschrieben, inklusive der jeweiligen Mengenangaben:

Schritt a) Eine Mischung aus 25 Gew.-% 2-Ethylhexylacrylat (2-EHA), 35 Gew.-% 2-(2-Ethoxyethoxy)ethylacrylat und 0.2 Gew.-% Benzoinethylether wurden in einem Rührkesselreaktor mit einer UV Lampe Philips Actinic BL TL-D 15W/10 1SL/25 (UV-A Strahlung 350 - 400 nm, Abstand zur Oberfläche der Reaktionsmischung: 20 cm) bis zu einem mit einem ReactIR 702L TEMCT von Mettler Toledo überwachten Umsatz von 10% bestrahlt. Die Reaktionstemperatur wurde während der Reaktion bei 20 °C gehalten. Die Reaktion wurde bei Erreichen des Sollumsatzes durch Abschalten der Lampe und Einblasen von Sauerstoff beendet.

Schritt b) Das Reaktionsgemisch aus Schritt a) ("Sirup") wurde mit 29.55 Gew.-% 2-Cyanoethylacrylat (2-CEA), weiteren 0.1 Gew.-% Benzoinethylether, 0.15 Gew.-% 2-(4-Methoxyphenyl)-4,6-bis(trichloromethyl)-1,3,5-triazin (MTT) und 10 Gew.-% Lithiumhexafluorophosphat vermischt.

Schritt c) Mittels Düsenbeschichtung wurde eine 30 $\mu$m dicke Schicht auf einen silikonisierten Liner (75$\mu$m PET) aufgetragen und mit einem zweiten 75$\mu$m PET Liner abgedeckt. Unter Ausschluss von Sauerstoff wurde die Mischung zwischen den beiden Linern mit der gleichen UV-A Strahlung wie zur Sirupherstellung verwendet bestrahlt. Mit einer Dosis von 80 mWs/cm$^2$ wurde die Aushärtung mittels 56 Lampen Philips Actinic BL TL-D 15W/10 1SL/25 vorgenommen, wobei die Verweilzeit im Bestrahlkanal 3,5 Minuten, d.h. 210 Sekunden betrug.

Beispiele 3 bis 9:

Die haftklebrigen Polyelektrolyten der Beispiele 3 bis 9 wurden hergestellt wie vorstehend für den Polyelektrolyten aus Beispiel 2 beschrieben, wobei Art und Menge der eingesetzten Komponenten wie in Tabelle 1 angegeben variiert wurden (die Komponenten ergänzen sich jeweils zu 100 Gew.-%). Eventuell eingesetzte Weichmacher (EC, DEC) sind nach der Härtung noch vollständig im Produkt.

Vergleichsbeispiel 10 - UV-Polymerisation:

Auch der Elektrolyt aus Vergleichsbeispiel 10 wurde mittels UV-Polymerisation hergestellt. Allerdings wurde auf einen Schritt a) der Präpolymerisation hierbei verzichtet. Es wurden in einem Schritt b) die Komponenten Trimethylolpropantrimethacrylat (TMPTMA), Lauroylperoxid, Lithiumhexafluorophosphat, Ethylencarbonat, Diethylcarbonat und Ethylmethylcarbonat gemischt und in Schritt c) eine 30 $\mu$m dicke Schicht auf einen silikonisierten Liner (75 $\mu$m PET) aufgetragen und mit einem zweiten 75 $\mu$m PET Liner abgedeckt. Unter Ausschluss von Sauerstoff wurde die Mischung zwischen den beiden Linern mit UV-A Strahlung bestrahlt. Mit einer Dosis von 80 mWs/cm$^2$ wurde die Aushärtung mittels 56 Lampen Philips Actinic BL TL-D 15W/10 1SL/25 vorgenommen, wobei die Verweilzeit im Bestrahlkanal 3,5 Minuten, d.h. 210 Sekunden, betrug (anstelle der Bestrahlung kann die Härtung auch thermisch erfolgen bei 80 °C für 1800 Sekunden). Art und Menge der Komponenten sind ebenfalls in Tabelle 1 angegeben.

Tabelle 1: Komponenten der Herstellung der Polymerelektrolyte sowie Härtungsbedingungen.

| Beispiel | Komponenten Schritt a) | Zugegebene Komponenten Schritt b) | Dosis (Zeit) in Schritt c) |
|---|---|---|---|
| 2 | 25 Gew.-% 2-EHA, 35 Gew.-% 2-(2-Ethoxyethoxy)ethylacrylat, 0,2 Gew.-% Benzoinethylether | 31,55 Gew.-% 2-CEA, 0,1 Gew.-% Benzoinethylether, 0,15 Gew.-% MTT, 8 Gew.-% LiPF$_6$ | 80 mWs/cm$^2$ (210 s) |
| 3 | 20 Gew.-% 2-EHA, 30 Gew.-% 2-(2-Ethoxyethoxy)ethylacrylat, 0,2 Gew.-% Benzoinethylether | 19,55 Gew.-% 2-CEA, 0,1 Gew.-% Benzoinethylether, 0,15 Gew.-% MTT, 10 Gew.-% LiPF$_6$, 10 Gew.-% EC, 10 Gew.-% DEC | 80 mWs/cm$^2$ (210 s) |
| 4 | 25 Gew.-% 2-EHA, 35 Gew.-% 2-(2-Ethoxyethoxy)ethylacrylat, 0,2 Gew.-% Benzoinethylether | 31,7 Gew.-% 2-CEA, 0,1 Gew.-% Benzoine-thylether, 8 Gew.-% LiPF$_6$ | 80 mWs/cm$^2$ (210 s) |
| 5 | 20 Gew.-% 2-EHA, 30 Gew.-% 2-(2-Ethoxyethoxy)ethylacrylat, 0,2 Gew.-% Benzoinethylether | 19,7 Gew.-% 2-CEA, 0,1 Gew.-% Benzoine-thylether, 10 Gew.-% LiPF$_6$, 10 Gew.-% EC, 10 Gew.-% DEC | 80 mWs/cm$^2$ (210 s) |
| 6 | 54,55 Gew.-% 2-EHA, 40 Gew.-% 2-(2-Ethoxyethoxy)-ethylacrylat, 0,2 Gew.-% Benzoinethylether | 0,1 Gew.-% Benzoinethylether, 0.15 Gew.-% MTT, 5 Gew.-% LiPF$_6$ | 80 mWs/cm$^2$ (210 s) |
| 7 | 25 Gew.-% 2-EHA, 35 Gew.-% 2-(2-Ethoxyethoxy)ethylacrylat, 0,2 Gew.-% Benzoinethylether | 31,55 Gew.-% 2-CEA, 0,1 Gew.-% Benzoinethylether, 0,15 Gew.-% MTT, 8 Gew.-% LiTFSI | 80 mWs/cm$^2$ (210 s) |
| 8 | 25 Gew.-% 2-EHA, 35 Gew.-%, 2-(2-Ethoxyethoxy)ethylacrylat, 0,2 Gew.-% Benzoinethylether | 31,55 Gew.-% 2-CEA, 0,1 Gew.-% Benzoinethylether, 0,15 Gew.-% MTT, 8 Gew.-% LiTFB | 80 mWs/cm$^2$ (210 s) |

(fortgesetzt)

| Beispiel | Komponenten Schritt a) | Zugegebene Komponenten Schritt b) | Dosis (Zeit) in Schritt c) |
|---|---|---|---|
| 9 | 18,15 Gew.-% 2-EHA, 30 Gew.-% 2-(2-Ethoxyethoxy)-ethylacrylat, 0,2 Gew.-% Benzoinethylether | 19,55 Gew.-% 2-CEA, 0,1 Gew.-% Benzoinethylether, 2 Gew.-% HDDA, 10 Gew.-% $LiPF_6$, 10 Gew.-% EC, 10 Gew.-% DEC | 80 mWs/cm$^2$ (210 s) |
| 10 | keine Präpolymerisation | 2 Gew.-% TMPTMA, 1 Gew.-% LPO, 97 Gew.-% 1M $LiPF_6$ in EC:EMC:DEC (Gew.-Verhältnis 1:1:1) | 80 mWs/cm$^2$ (210 s) (oder 80°C (1800 s)) |

Ergebnisse und Diskussion:

Tabelle 2 zeigt das Eigenschaftsprofil der hergestellten Polymerelektrolyten aus den Beispielen 1 bis 10. Angegeben sind jeweils die Ionenleitfähigkeit, die Glastemperatur ($T_g$), die Klebkraft (KK) auf Stahl, die Scherstandszeit (Holding Power, HP), die Wärmebeständigkeit (Shear Adhesion Failure Temperature, SAFT), der Haze, die Transmission und der Farbparameter b* wie im Prüfmethodenteil ermittelt.

Tabelle 2: Eigenschaftsprofil der Polymerelektrolyten.

| Beispiel | Ionenleitfähigkeit [S/cm] | $T_g$ [°C] | KK Stahl [N/cm] | HP [min.] | SAFT [°C] | Haze [%] | Transmission [%] | b* |
|---|---|---|---|---|---|---|---|---|
| 1 | $1,5*10^{-5}$ | -28 | 4,5 | 10000 | >200 | 2,0 | 98 | 2,6 |
| 2 | $8,8*10^{-5}$ | -45 | 4,2 | 10000 | >200 | 1,1 | 98 | 1,5 |
| 3 | $2,3*10^{-3}$ | -52 | 3,9 | 8668 | 135 | 1,3 | 98 | 1,1 |
| 4 | $1,2*10^{-4}$ | -53 | 4,6 | 9567 | 161 | 1,1 | 99 | 1,2 |
| 5 | $4,2*10^{-3}$ | -51 | 3,6 | 4571 | 144 | 1,4 | 98 | 0,7 |
| 6 | $9,2*10^{-6}$ | -65 | 3,1 | 2554 | 112 | 1,3 | 97 | 1,2 |
| 7 | $2,9*10^{-5}$ | -45 | 3,8 | 10000 | 192 | 1,3 | 98 | 1,8 |
| 8 | $1,3*10^{-5}$ | -45 | 3,4 | 10000 | >200 | 1,5 | 98 | 1,1 |
| 9 | $7,3*10^{-3}$ | -51 | 2,4 | 10000 | 138 | 1,1 | 98 | 0,7 |
| 10 | $1,1*10^{-2}$ | 27 | 0,1 | n.a. | n.a. | 14,7 | 95 | 2,1 |

Beispiel 2 zeigt einen transparenten Polymerelektrolyten, der einen hohen Anteil an Leitsalz aufnehmen kann. Durch die hohe Polarität von über 30 Gew.-% polymerisiertem 2-CEA ist die Löslichkeit hoch und aufgrund des Zusatzes im zweiten Polymerisationsschritt auf der bereits ausgeformten Bahn stört eine Gelbildung die Optik nicht. Daher kann auf regelnde Zusätze wie z.B. RAFT-Regler verzichtet werden. 2-CEA neigt aufgrund der rohstoffseitigen Verunreinigungen stark zur Vergelung und kann bei den normalerweise eingesetzten Prozessen nur in kleinen Konzentrationen eingesetzt werden. Beispiel 3 enthält zusätzlich noch niedermolekulare Weichmacher. Trotzdem ist die Kohäsion mit 8668 Minuten noch in einem zufriedenstellenden Bereich. Der Weichmacheranteil wirkt sich positiv auf die Ionmobilität aus und die Leitfähigkeit steigt.

Beispiel 4 zeigt, dass auch ohne den Zusatz des verzweigenden Vernetzers MTT bei einem hohen Anteil an eingesetztem 2-CEA eine ausreichende Kohäsion erzielt werden kann, insbesondere wenn keine weiteren Regler eingesetzt werden. Auch hier ist die Ionenleitfähigkeit etwas besser als beim Einsatz von MTT. Beispiel 5 jedoch hat eine geringe Kohäsion, wenn ohne den verzweigenden Vernetzer mit hohem Weichmacheranteil und mit geringerem 2-CEA-Gehalt polymerisiert wird.

Beispiel 6 hat einen hohen Anteil an eingesetztem unpolarem 2-EHA und kann entsprechend wenig Leitsalz lösen. Die Ionenleitfähigkeit ist entsprechend gering.

Beispiele 7 und 8 verwenden die Leitsalze LiTSFI und LiTFB, wobei die Leitfähigkeit immer noch einen ausreichenden Wert annimmt, jedoch unter dem des $LiPF_6$.

Beispiel 9 zeigt, dass mit dem vernetzenden Monomer HDDA trotz hohem Weichmacheranteil noch gute Kohäsionen und Leitfähigkeiten zu erzielen sind. Insbesondere der niedrige b*-Wert fällt auf.

Beispiel 10 zeigt einen Elektrolyten mit zwar hoher Leitfähigkeit, jedoch geringer dimensionaler Stabilität und Klebkraft. Mangels Kohäsion waren weder Scherstandzeit noch SAFT-Test messbar, weil die Probe bereits beim Aufhängen vor der Messung versagte. Weiterhin war das Polymernetzwerk nicht kompatibel mit dem Leitsalz und Weichmacher, so dass eine inhomogene poröse Struktur entstand, die einen sehr hohen Haze von 14,7% aufwies. Derartig hohe Haze-Werte sind für optisch transparente Zellen wie z.B. elektrochrome Systeme nicht tolerierbar.

*Prüfmethoden:*

Alle Messungen wurden, sofern nichts anderes angegeben ist, bei 23 °C und 50 % rel. Luftfeuchtigkeit durchgeführt. Sofern nicht anders angegeben, wurden die Messungen des haftklebrigen Polymerelektrolyten zudem an einer Schicht des Polymerelektrolyten einer Dicke von 30 μm durchgeführt, d.h. die Messergebnisse bezüglich des haftklebrigen Polymerelektrolyten beziehen sich typischerweise auf eine Schichtdicke von 30 μm.

Die mechanischen und klebtechnischen Daten wurden wie folgt ermittelt:

*Test A - Klebkraft*

Die Klebkraft der Proben in Form eines Klebebands einer Dicke von 30 μm auf einem Glassubstrat (Schälfestigkeit) wurde mit einem Verfahren gemäß PSTC 1 bestimmt. Hierzu wurde ein Streifen des Flächenelements mit einer Breite von 2 cm derart auf eine Glasplatte aufgebracht, dass lediglich ein freier Endabschnitt des Streifens nicht mit der Oberfläche der Glasplatte in Kontakt stand. Der mit dem Glassubstrat in Kontakt stehende Bereich des Klebestreifens wurde mit Hilfe einer Rolle mit einer Masse von 2 kg an das Glassubstrat durch dreimaliges Überrollen definiert angepresst, wobei jedes Überrollen zwei jeweils in gegenläufigen Vorschubrichtungen belastende Rollendurchgänge umfasste. Anschließend wurde das temporäre Abdeckungsmittel mit der Hand abgezogen.

Zur eigentlichen Messung der Klebkraft wurde die Glasplatte mit dem derart befestigten Flächenelement ortsfest fixiert. Das Flächenelement wurde mit seinem freien Ende an einer Zugprüfmaschine befestigt und 10 min nach dem Verkleben (Messung der Sofortklebkraft) mittels der Zugprüfmaschine unter einem Schälwinkel von 180 ° mit einer Vorschubgeschwindigkeit von 300 mm/min abgezogen. Die maximale Kraft, bei der noch kein Lösen der Verklebung beobachtet wurde, entspricht der Klebkraft auf dem entsprechenden Haftgrund; diese ist in N/cm angegeben. Der Messwert (in N/cm) ergab sich als Mittelwert aus drei Einzelmessungen.

*Test B - Ionenleitfähigkeit*

Die Ionenleitfähigkeit für Lithium Ionen wurde mit EIS (Elektrchemischer Impedanz Spektroskopie) gemessen, indem die Ionenleitfähigkeit aus dem Nyquist Plot Fit eines passenden Ersatzschaltbildes berechnet wurde. Zur Messung wurde ein Metrohm Autolab PGSTAT204 mit FRA32M Modul mit einer angebundenen Autolab Microcell HC Apparatur mit aufgesetzter TSC Batteriezelle verwendet. Eine Probe mit einem Durchmesser von 10 mm wurde zwischen die Elektroden appliziert. Die Probendicke wurde zur Berechnung der Zellkonstante vorab mit einem Wolf DM2010 Dickentaster gemessen. Die Messung erfolgte mit einer Frequenz von 100 kHz bis 0.1 Hz mit einer AC Spannung von 10 mV RMS. Die Auswertung erfolgte mit der Sortware NOVA2. Die Messtemperatur betrug 25°C.

*Test C - Glasübergangstemperatur $T_g$*

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage betrug 20 mg.

*Test D - Haze*

Der Haze-Wert beschreibt den Anteil des transmittierten Lichts, der von der durchstrahlten Probe nach vorne großwinklig gestreut wird. Somit quantifiziert der Haze-Wert Materialfehler in der Oberfläche oder der Struktur, die die klare Durchsicht stören. Zur Probenvorbereitung wurde ein 30 μm Transferklebeband der haftklebrigen Probe blasenfrei auf eine Polycarbonat-Folie (125 μm Lexan 8010 mit frisch ausgedeckten Oberflächen; Haze dieser Folie allein 0,09 %) aufgebracht. Das Verfahren zur Messung des Haze-Wertes wird in der Norm ASTM D 1003 beschrieben. Die Norm erfordert die Messung von vier Transmissionsmessungen. Für jede Transmissionsmessung wird der Lichttransmissionsgrad berechnet. Die vier Transmissionsgrade werden zum prozentualen Haze-Wert verrechnet. Der Haze-Wert wurde mit einem Hazegard Plus der Byk-Gardner GmbH gemessen. Die Proben wurden senkrecht durchstrahlt und das durchgelassene Licht in einer integrierenden Kugel (Ulbrichtkugel) auf fotoelektrischem Wege gemessen. Die spektrale Empfindlichkeit ist an die CIE-Normspektralwertfunktion Y unter Normlicht C angepasst.

*Test E - Transmission*

Zur Probenvorbereitung wurde ein 30 $\mu$m Transferklebeband der haftklebrigen Probe blasenfrei auf eine Polycarbonat-Folie (125 $\mu$m Lexan 8010 mit frisch ausgedeckten Oberflächen; Haze dieser Folie allein 0,09 %) aufgebracht. Die Werte für Transmission und Haze wurden an einem Hazegard Plus der Firma Byk Gardner gemessen. Die Proben wurden senkrecht durchstrahlt und das durchgelassene Licht in einer integrierenden Kugel (Ulbrichtkugel) auf fotoelektrischem Wege gemessen. Die spektrale Empfindlichkeit ist an die CIE-Normspektralwertfunktion Y unter Normlicht C angepasst. Die Transmission wurde im Wellenlängenbereich von 190 bis 900 nm mit einem Uvikon 923 der Firma Biotek Kontron gemessen. Die Absolute Transmission wird als Wert bei 550 nm in % angegeben. Vor der Messung wurde eine Leerkanalmessung über den gesamten Wellenlängenbereich durchgeführt.

*Test F - Farbcharakteristik*

Es wurde gemäß DIN EN ISO 11664 vorgegangen und die Farbcharakteristik im dreidimensionalen Raum, aufgespannt durch die drei Farbparameter L\*, a\* und b\*, nach CIELAB untersucht. Dazu wurde ein BYK Gardener Spectro Guide Messgerät verwendet, ausgestattet mit einer D/65° Lampe. Innerhalb des CIELAB-Systems gibt L\* den Grauwert (0 = schwarz, 100 = weiß), a\* die Farbachse von grün nach rot (-120 = grün, +120 = rot) und b\* die Farbachse von blau nach gelb an (-120 = blau, +120 = gelb). Der positive Wertebereich für b\* gibt somit beispielsweise die Intensität des gelben Farbanteils an. Als Referenz diente eine weiße Keramikfliese mit einem b\* von +1,05. Diese Fliese diente zudem als Probenhalter, auf den die zu prüfende Klebschicht auflaminiert wurde. Die Farbmessung der zu prüfenden Klebemasse, d.h. haftklebrigen Probe, erfolgte an der jeweiligen reinen Klebemasseschicht, wenn nicht anders angegeben in 30 $\mu$m Schichtdicke. Die in der Anmeldung angegebenen Werte für L\*, a\* und b\* der Klebemasseschicht sind bereits bereinigt um die Werte der Substratfliese. Beispielsweise ist b\* der Klebemasseschicht wie in der Anmeldung angegeben die Differenz aus der Farbwertbestimmung für das Klebefilmmuster appliziert auf der Substratfliese und der Farbwertbestimmung der reinen Substratfliese.

*Test G - Shear Adhesion Failure Temperature (SAFT), Wärmebeständigkeit*

Dieser Test dient der Schnellprüfung der Scherfestigkeit von Klebebändern unter Temperaturbelastung. Ein aus dem jeweiligen Probenmuster, d.h. einer haftklebrigen Probe einer Schichtdicke von 30 $\mu$m, geschnittenes Klebeband (Länge ca. 50 mm, Breite 10 mm) wurde auf eine mit Aceton gereinigte Stahl-Prüfplatte verklebt, so dass die Stahlplatte das Klebeband rechts und links überragte und dass das Klebeband die Prüfplatte am oberen Rand um 2 mm überragte. Die Verklebungsfläche der Probe betrug Höhe x Breite = 13mm x 10mm. Die Verklebungsstelle wurde anschließend mit einer 2 kg-Stahlrolle und einer Geschwindigkeit von 10 m/min sechsmal überrollt. Das Klebeband wurde bündig mit einem stabilen Klebestreifen verstärkt, der als Auflage für den Wegmessfühler diente. Die Probe wurde mittels der Prüfplatte senkrecht aufgehängt.

Das zu vermessende Probenmuster wurde am unteren Ende mit einem Gewicht von 50 g belastet. Die Stahl-Prüfplatte mit dem verklebten Probenmuster wurde beginnend bei 25 °C mit einer Rate von 9 °C pro Minute auf die Endtemperatur von 200 °C aufgeheizt. Gemessen wurd der Rutschweg des Probenmusters ("SAFT-Scherweg") mittels Wegmessfühler in Abhängigkeit von Temperatur und Zeit. Der maximale Rutschweg ist auf 1000 $\mu$m festgelegt, bei Überschreiten wird der Test abgebrochen.

*Test H - Scherstandszeit*

Ein 13 mm breiter Streifen des jeweiligen Probenmusters (Klebeband in Form einer Schicht der haftklebrigen Probe mit einer Dicke von 30 $\mu$m) wurde auf eine Stahlplatte aufgebracht. Die Stahlplatten wurden zuvor viermal mit Aceton gewischt und mindestens 1 Minute, maximal 10 Minuten, an der Luft liegen gelassen. Die Auftragsfläche betrug 20 mm \* 13 mm (Länge \* Breite). Anschließend wurde das Klebeband durch eine Rolle mit einem Gewicht von 2 kg viermal auf den Stahlträger gedrückt. Es wurde ein 1 kg-Gewicht an dem Klebeband befestigt. Die gemessenen Scherstandszeiten sind in Minuten angegeben und entsprechen dem Mittelwert aus drei Messungen. Die Messungen wurde bei 40 °C in einem Wärmeschrank durchgeführt. Nach spätestens 10000 min. wurde der Versuch jeweils abgebrochen.

*Test I - Elektrochemische Stabilität*

Für die Bestimmung der elektrochemischen Stabilität, d.h. oxidativen Stabilität wurde die lineare Vorschubvoltammetrie (LSV) gegen Platingegenelektrode bei einem Vorschub von 1 mV/s eingesetzt. Es wurde ein Bereich von -0.1V bis 6.5 V gegen Li/Li$^+$ gemessen, wobei im anodischen Bereich Platin als Arbeitselektrode und im kathodischen Bereich Kupfer als Arbeitselektrode eingesetzt wurde. Bei Auftragung der Stromdichte [mA/cm$^2$] gegen das Potenzial gegen Li/Li$^+$

[V] wurde das Stabilitätsfenster auf eine maximale Abweichung der Stromdichte von 0.25 mA/cm$^2$ definiert. Zur Messung wurde ein Metrohm Autolab PGSTAT204 eingesetzt und zur Auswertung die Software NOVA2 verwendet.

*Test J - relative Permittivität $\varepsilon_r$*

Die Messung der relativen Permittivität erfolgte bei einer Temperatur von 23 °C in einem Plattenkondensator mit variablem Messspalt, dessen Elektrodenplatten einen Durchmesser von 60 mm aufweisen. Zur Messung wurde eine Probe homogener Dicke als Dielektrikum lufteinschlussfrei in den Messspalt eingebracht und mit den beiden Elektrodenplatten vollflächig und zwischenraumfrei in Kontakt gebracht. Der sich hierbei ergebende Abstand der Elektrodenplatten (der im Idealfall mit der Stärke der zu prüfenden Probe identisch sein sollte) wird mittels eines Messschiebers bestimmt. Zusätzlich wurde eine Blindmessung bei identischem Abstand der Elektrodenplatten durchgeführt, wofür das zu prüfende Material entfernt wurde, so dass bei der Blindmessung Luft als Dielektrikum bekannter Permittivität eingesetzt wurde. Für die Messung wie für die Blindmessung wurde die Kapazität des Messaufbaus für eine Messfrequenz von 1 kHz mit einem LCR-Messgerät (Typ: GWInstec LCR 821) ermittelt. Die relative Permittivität des Probenmaterials wurde bei einem Vergleich der beiden ermittelten Kapazitäten bestimmt; die Berechnung erfolgte nach herkömmlichen Bestimmungsmethoden wie sie beispielsweise in der Norm ASTM D150 festgelegt sind.

**Patentansprüche**

1. Haftklebriger Polymerelektrolyt mit einer Klebkraft gemäß dem in der Beschreibung beschriebenen Test A von mehr als 1 N/cm und einer Ionenleitfähigkeit gemäß dem in der Beschreibung beschriebenen Test B von mehr als 10$^{-6}$ (Ohm\*cm)$^{-1}$, hergestellt durch Polymerisation eines Gemisches, das mindestens folgende Komponenten umfasst:

   • 5 - 60 Gew.-%, vorzugsweise 10 - 50 Gew.-%, insbesondere 15 - 30 Gew.-%, Acrylatmonomer aus der Gruppe der (Meth)Acrylsäureester mit 4 - 15 Kohlenstoffatomen, wobei sich die Zahl der Kohlenstoffatome jeweils auf das gesamte Molekül, das heißt auf Säurekomponente und Alkoholkomponente zusammen, bezieht und das Acrylatmonomer als Homopolymer einen $T_g$ gemäß dem in der Beschreibung beschriebenen Test C von weniger als -30 °C aufweisen würde,
   • 10 - 80 Gew.-%, vorzugsweise 35 - 75 Gew.-%, insbesondere 50 - 70 Gew.-%, Acrylatmonomer aus der Gruppe der (Meth)Acrylsäureester mit 4 - 25 Kohlenstoffatomen und enthaltend mindestens ein Heteroatom, wobei sich die Zahl der Kohlenstoffatome jeweils auf das gesamte Molekül, das heißt auf Säurekomponente und Alkoholkomponente zusammen, bezieht, das Heteroatom zusätzlich zu den beiden O-Atomen der Esterfunktionalität vorliegt und das Acrylatmonomer als Homopolymer einen $T_g$ gemäß dem in der Beschreibung beschriebenen Test C von weniger als 100 °C aufweisen würde,
   • 0,05 - 10 Gew.-%, vorzugsweise 0,1 - 2 Gew.-%, Initiator,
   • 2 - 13 Gew.-%, vorzugsweise 3 - 10 Gew.-%, insbesondere 4 - 8 Gew.-%, Leitsalz,
   • optional Weichmacher, vorzugsweise in einem Anteil von 5 bis 50 Gew.-%,
   • und optional Lösungsmittel, das typischerweise nach der Polymerisation zumindest teilweise, wie zum Beispiel im Wesentlichen vollständig, entfernt wird,

   wobei optional ein oder mehrere der Komponenten zumindest anteilig, wie zum Beispiel vollständig, erst während oder nach der Polymerisation zugegeben werden.

2. Haftklebriger Polymerelektrolyt nach Anspruch 1, **dadurch gekennzeichnet, dass** der Initiator thermischer Initiator und/oder Photoinitiator ist, vorzugsweise Photoinitiator, wobei der Initiator jeweils vorzugsweise eine radikalische Polymerisation initiiert.

3. Haftklebriger Polymerelektrolyt nach Anspruch 1 oder 2, **dadurch gekennzeichnet, dass** die Polymerisation eine UV-Polymerisation ist, vorzugsweise eine radikalische UV-Polymerisation.

4. Haftklebriger Polymerelektrolyt nach einem der vorhergehenden Ansprüche, **dadurch gekennzeichnet, dass** das Gemisch ferner Vernetzer enthält, vorzugsweise in einem Anteil von 0,05 bis 5 Gew.-%, bevorzugter von 0,1 bis 3 Gew.-%, wie zum Beispiel von 0,15 bis 2 Gew.-%.

5. Haftklebriger Polymerelektrolyt nach einem der vorhergehenden Ansprüche, **gekennzeichnet durch** einen Haze gemäß Test D von weniger als 10%, vorzugsweise weniger als 5% und insbesondere weniger als 2%, wie zum Beispiel weniger als 1%.

6.  Haftklebriger Polymerelektrolyt nach einem der vorhergehenden Ansprüche, **gekennzeichnet durch** eine Transmission gemäß Test E von mehr als 75%, vorzugsweise mehr als 85% und insbesondere mehr als 90%, wie zum Beispiel mehr als 95%.

7.  Haftklebriger Polymerelektrolyt nach einem der vorhergehenden Ansprüche, **gekennzeichnet durch** einen Farbparameter b* gemäß Test F von -6 < b* < 6, vorzugsweise -2 < b* < 2 und insbesondere -1 < b* <1.

8.  Haftklebriger Polymerelektrolyt nach einem der vorhergehenden Ansprüche, **gekennzeichnet durch** einen Farbparameter a* gemäß Test F von -6 < a* < 6, vorzugsweise -2 < a* < 2 und insbesondere -1 < a* <1.

9.  Haftklebriger Polymerelektrolyt nach einem der vorhergehenden Ansprüche, **gekennzeichnet durch** eine Wärmebeständigkeit gemäß Test G von mehr als 60°C, vorzugsweise mehr als 100 °C, bevorzugter mehr als 150 °C und insbesondere mehr als 200 °C.

10. Haftklebriger Polymerelektrolyt nach einem der vorhergehenden Ansprüche, **gekennzeichnet durch** eine Scherstandszeit gemäß Test H von mehr als 10 min, vorzugsweise mehr als 1000 min und insbesondere mindestens 10000 min.

11. Haftklebeband enthaltend mindestens eine Schicht eines haftklebrigen Polymerelektrolyten gemäß einem der Ansprüche 1 bis 10, wobei das Haftklebeband typischerweise doppelseitig klebend ist und insbesondere ein Transferklebeband ist.

12. Produktrolle umfassend (a) einen Rollenkern und (b) einen bahnförmig geformten haftklebrigen Polymerelektrolyt gemäß einem der Ansprüche 1 bis 10 oder ein Haftklebeband gemäß Anspruch 11, wobei der haftklebrige Polymerelektrolyt oder das Haftklebeband in Form einer archimedischen Spirale mehrlagig auf den Rollenkern aufgewickelt ist.

13. Verwendung des haftklebrigen Polymerelektrolyts gemäß einem der Ansprüche 1 bis 10 oder des Haftklebebands gemäß Anspruch 11 in einer elektrochromen Verglasung oder einer Batterie.

14. Elektrochromes System umfassend eine erste Halbzelle A und eine zweite Halbzelle B, wobei die beiden Halbzellen A und B über einen haftklebrigen Polymerelektrolyten gemäß einem der Ansprüchen 1 bis 10 oder ein Haftklebeband gemäß Anspruch 11 vollflächig oder teilflächig miteinander verbunden sind, wobei vorzugsweise

    die erste Halbzelle A einen flächigen elektrisch leitfähig beschichteten Polymer- oder Glassubsttratkörper aufweist und auf der leitfähig beschichteten Seite ein vollflächig oder partiell aufgetragenes Anodenmaterial aufgebracht ist, und
    die zweite Halbzelle B ebenfalls einen flächigen und elektrisch leitfähig beschichteten Polymer- oder Glassubstratkörper aufweist und auf der elektrisch leitfähig beschichteten Seite ein vollflächig oder partiell aufgetragenes Kathodenmaterial aufgebracht ist.

15. Verfahren zur Herstellung eines elektrochromen Systems, bei dem eine erste Halbzelle A und eine zweite Halbzelle B durch Auflaminieren eines haftklebrigen Polymerelektrolyts gemäß einem der Ansprüche 1 bis 10 oder von Haftklebeband gemäß Anspruch 11 miteinander zu einem elektrochromen System verbunden werden, wobei die Halbzellen A und B vorzugsweise wie in Anspruch 14 definiert sind.

**Claims**

1.  A pressure-sensitive adhesive polymer electrolyte with a peel adhesion in accordance with test A, described in the description, of more than 1 N/cm and an ionic conductivity in accordance with test B, described in the description, of more than $10^{-6}(ohm*cm)^{-1}$, produced by polymerizing a mixture which comprises at least the following components:

    • 5 - 60% by weight, preferably 10 - 50% by weight, in particular 15 - 30% by weight, of acrylate monomer from the group formed by (meth)acrylic acid esters containing 4 - 15 carbon atoms, wherein the number of carbon atoms is in each case with respect to the whole molecule, i.e. the acid component and alcohol component together, and the acrylate monomer would, as a homopolymer, have a $T_g$ in accordance with test C, described in the description, of less than -30°C,

- 10 - 80% by weight, preferably 35 - 75% by weight, in particular 50 - 70% by weight, of acrylate monomer from the group formed by (meth)acrylic acid esters containing 4 - 25 carbon atoms and containing at least one heteroatom, wherein the number of carbon atoms is in each case with respect to the whole molecule, i.e. the acid component and alcohol component together, the heteroatom in addition to the two O atoms being present in the ester functional group and the acrylate monomer would, as a homopolymer, have a $T_g$ in accordance with test C, described in the description, of less than 100°C,
- 0.05 - 10% by weight, preferably 0.1 - 2% by weight, of initiator,
- 2 - 13% by weight, preferably 3 - 10% by weight, in particular 4 - 8% by weight, of conducting salt,
- optionally, plasticizer, preferably in a proportion of 5 to 50% by weight,
- and optionally, solvent which, following polymerization, is typically at least partially removed, such as, for example, substantially completely removed,

wherein optionally, at least a proportion, such as the entirety, for example, of one or more of the components are added only during or after the polymerization.

2. The pressure-sensitive adhesive polymer electrolyte as claimed in claim 1, **characterized in that** the initiator is a thermal initiator and/or a photoinitiator, preferably a photoinitiator, wherein in each case, the initiator preferably initiates a radical polymerization.

3. The pressure-sensitive adhesive polymer electrolyte as claimed in claim 1 or claim 2, **characterized in that** the polymerization is a UV polymerization, preferably a radical UV polymerization.

4. The pressure-sensitive adhesive polymer electrolyte as claimed in one of the preceding claims, **characterized in that** the mixture further comprises crosslinkers, preferably in a proportion of 0.05 to 5% by weight, more preferably from 0.1 to 3% by weight, such as, for example, from 0.15 to 2% by weight.

5. The pressure-sensitive adhesive polymer electrolyte as claimed in one of the preceding claims, **characterized by** a haze in accordance with test D of less than 10%, preferably less than 5% and in particular less than 2%, such as, for example, less than 1%.

6. The pressure-sensitive adhesive polymer electrolyte as claimed in one of the preceding claims, **characterized by** a transmission in accordance with test E of more than 75%, preferably more than 85% and in particular more than 90%, such as, for example, more than 95%.

7. The pressure-sensitive adhesive polymer electrolyte as claimed in one of the preceding claims, **characterized by** a colour parameter b* in accordance with test F of -6 < b* < 6, preferably -2 < b* < 2 and in particular -1 < b* < 1.

8. The pressure-sensitive adhesive polymer electrolyte as claimed in one of the preceding claims, **characterized by** a colour parameter a* in accordance with test F of -6 < a* < 6, preferably -2 < a* < 2 and in particular -1 < a* < 1.

9. The pressure-sensitive adhesive polymer electrolyte as claimed in one of the preceding claims, **characterized by** a thermal resistance in accordance with test G of more than 60°C, preferably more than 100°C, more preferably more than 150°C and in particular more than 200°C.

10. The pressure-sensitive adhesive polymer electrolyte as claimed in one of the preceding claims, **characterized by** a holding power in accordance with test H of more than 10 min, preferably more than 1000 min and in particular at least 10000 min.

11. A pressure-sensitive adhesive tape containing at least one layer of a pressure-sensitive adhesive polymer electrolyte as claimed in one of claims 1 to 10, wherein the pressure-sensitive adhesive tape is typically double-sided and in particular is an adhesive transfer tape.

12. A roll of product comprising (a) a roll core and (b) a pressure-sensitive adhesive polymer electrolyte as claimed in one of claims 1 to 10 in the form of a web, or a pressure-sensitive adhesive tape as claimed in claim 11, wherein the pressure-sensitive polymer electrolyte or the pressure-sensitive adhesive tape is wound onto the roll core in multiple plies in the form of an Archimedean spiral.

13. Use of the pressure-sensitive adhesive polymer electrolyte as claimed in one of claims 1 to 10 or of the pressure-sensitive adhesive tape in accordance with claim 11 in electrochromic glazing or in a battery.

14. An electrochromic system comprising a first half-cell A and a second half-cell B, wherein the two half-cells A and B are connected to each other over the entire area or a portion of the area via a pressure-sensitive adhesive polymer electrolyte as claimed in one of claims 1 to 10 or a pressure-sensitive adhesive tape as claimed in claim 11, wherein preferably, the first half-cell A has a laminar electrically conductively coated polymer or glass substrate body and an anode material is applied to the entirety of or a portion of the conductively coated side, and the second half-cell B also has a laminar and electrically conductively coated polymer or glass substrate body and a cathode material is applied to the entirety of or a portion of the electrically conductively coated side.

15. A method for the production of an electrochromic system, in which a first half-cell A and a second half-cell B are connected to each other to form an electrochromic system by lamination of a pressure-sensitive adhesive polymer electrolyte as claimed in one of claims 1 to 10 or of a pressure-sensitive adhesive tape as claimed in claim 11, wherein the half-cells A and B are preferably as defined in claim 14.

**Revendications**

1. Electrolyte polymère ayant des propriétés d'adhésif sensible à la pression dont l'adhérence selon l'essai A tel que présenté dans la description est supérieure à 1 N/cm et dont la conductivité ionique selon l'essai B tel que présenté dans la description est supérieure à $10^{-6}$ (Ohm*cm)$^{-1}$, fabriqué par polymérisation d'un mélange comprenant au moins les constituants suivants:

   • 5 à 60 % en poids, de préférence 10 à 50 % en poids, notamment 15 à 30 % en poids, de monomère d'acrylate issu du groupe des esters d'acide (méth)acrylique renfermant 4 à 15 atomes de carbone, le nombre d'atomes de carbone se référant toujours à la molécule entière, à savoir à l'ensemble de la composante acide et de la composante alcool, et la $T_g$ du monomère d'acrylate, si ce dernier se présentait sous forme d'homopolymère, étant inférieure à -30 °C selon l'essai C tel que présenté dans la description,
   • 10 à 80 % en poids, de préférence 35 à 75 % en poids, notamment 50 à 70 % en poids, de monomère d'acrylate issu du groupe des esters d'acide (méth)acrylique renfermant 4 à 25 atomes de carbone et contenant au moins un hétéroatome, le nombre d'atomes de carbone se référant toujours à la molécule entière, à savoir à l'ensemble de la composante acide et de la composante alcool, l'hétéroatome étant présent de manière supplémentaire aux deux atomes O du groupe fonctionnel ester, et la $T_g$ du monomère d'acrylate, si ce dernier se présentait sous forme d'homopolymère, étant inférieure à 100 °C selon l'essai C tel que présenté dans la description
   • 0,05 à 10 % en poids, de préférence 0,1 à 2 % en poids, d'initiateur,
   • 2 à 13 % en poids, de préférence 3 à 10 % en poids, notamment 4 à 8 % en poids, de sel conducteur,
   • optionnellement, du plastifiant, préférentiellement dans une proportion comprise entre 5 et 50 % en poids,
   • et optionnellement du solvant, qui est typiquement enlevé après la polymérisation, au moins en partie, par exemple sensiblement dans sa totalité,

   un ou plusieurs des constituants n'étant optionnellement ajoutés, au moins en partie et par exemple dans leur totalité, que pendant ou après la polymérisation.

2. Electrolyte polymère ayant des propriétés d'adhésif sensible à la pression selon la revendication 1, **caractérisé en ce que** ledit initiateur est un initiateur thermique et/ou un photoinitiateur, de préférence un photoinitiateur, l'initiateur initialisant à chaque instance préférentiellement une polymérisation radicalaire.

3. Electrolyte polymère ayant des propriétés d'adhésif sensible à la pression selon les revendications 1 ou 2, **caractérisé en ce que** la polymérisation est une polymérisation UV, de préférence une polymérisation UV radicalaire.

4. Electrolyte polymère ayant des propriétés d'adhésif sensible à la pression selon l'une des revendications précédentes, **caractérisé en ce que** ledit mélange contient en outre de l'agent de réticulation, préférentiellement dans une proportion comprise entre 0,05 et 5 % en poids, de manière plus préférée entre 0,1 et 3 % en poids comme, par exemple, entre 0,15 et 2 % en poids.

5. Electrolyte polymère ayant des propriétés d'adhésif sensible à la pression selon l'une des revendications précédentes, **caractérisé par** un voile selon l'essai D qui est inférieur à 10 %, préférentiellement inférieur à 5 % et notamment inférieur à 2 % comme, par exemple, inférieur à 1 %.

**6.** Electrolyte polymère ayant des propriétés d'adhésif sensible à la pression selon l'une des revendications précédentes, **caractérisé par** une transmission selon l'essai E qui est supérieure à 75 %, préférentiellement supérieure à 85 % et notamment supérieure à 90 % comme, par exemple, supérieure à 95 %.

**7.** Electrolyte polymère ayant des propriétés d'adhésif sensible à la pression selon l'une des revendications précédentes, **caractérisé par** un paramètre colorimétrique b* selon l'essai F de -6 < b* < 6, préférentiellement -2 < b* < 2 et notamment -1 < b* <1.

**8.** Electrolyte polymère ayant des propriétés d'adhésif sensible à la pression selon l'une des revendications précédentes, **caractérisé par** un paramètre colorimétrique a* selon l'essai F de -6 < a* < 6, préférentiellement -2 < a* < 2 et notamment -1 < a* <1.

**9.** Electrolyte polymère ayant des propriétés d'adhésif sensible à la pression selon l'une des revendications précédentes, **caractérisé par** une résistance thermique selon l'essai G qui est supérieure à 60 °C, préférentiellement supérieure à 100 °C, de manière plus préférée supérieure à 150 °C et notamment supérieure à 200 °C.

**10.** Electrolyte polymère ayant des propriétés d'adhésif sensible à la pression selon l'une des revendications précédentes, **caractérisé par** un temps de résistance au cisaillement selon l'essai H qui est supérieur à 10 min, préférentiellement supérieur à 1000 min et notamment supérieur à 10000 min.

**11.** Ruban adhésif sensible à la pression, contenant au moins une couche d'un électrolyte polymère ayant des propriétés d'adhésif sensible à la pression selon l'une des revendications 1 à 10, le ruban adhésif sensible à la pression étant typiquement à double face collante, s'agissant notamment ruban adhésif de type transfert.

**12.** Rouleau de produit, comprenant (a) un support de rouleau et (b) un électrolyte polymère ayant des propriétés d'adhésif sensible à la pression selon l'une des revendications 1 à 10 et se présentant sous forme d'une bande ou bien un ruban adhésif sensible à la pression selon la revendication 11, l'électrolyte polymère ayant des propriétés d'adhésif sensible à la pression ou le ruban adhésif sensible à la pression étant enroulé en plusieurs couches sur le support de rouleau de manière à former une spirale d'Archimède.

**13.** Utilisation de l'électrolyte polymère ayant des propriétés d'adhésif sensible à la pression selon l'une des revendications 1 à 10 ou du ruban adhésif sensible à la pression selon la revendication 11 dans un vitrage électrochrome ou dans une batterie.

**14.** Système électrochrome, comprenant une première demi-cellule A et une seconde demi-cellule B, les deux demi-cellules A et B étant reliées l'une à l'autre sur toute leur surface ou sur une partie de leur surface à travers un électrolyte polymère ayant des propriétés d'adhésif sensible à la pression selon l'une des revendications 1 à 10 ou un ruban adhésif sensible à la pression selon la revendication 11, alors que préférentiellement la première demi-cellule A présente un corps de substrat en polymère ou en verre dont la surface est pourvue d'un revêtement électriquement conducteur, un matériau d'anode étant appliqué sur la totalité ou une partie de la surface de la face pourvue d'un revêtement conducteur, et la seconde demi-cellule B présente un corps de substrat en polymère ou en verre dont la surface est également pourvue d'un revêtement électriquement conducteur, un matériau de cathode étant appliqué sur la totalité ou une partie de la surface de la face pourvue d'un revêtement électriquement conducteur.

**15.** Procédé de fabrication d'un système électrochrome, consistant à relier une première demi-cellule A et une seconde demi-cellule B en y appliquant par lamination un électrolyte polymère ayant des propriétés d'adhésif sensible à la pression selon l'une des revendications 1 à 10 ou un ruban adhésif sensible à la pression selon la revendication 11, pour ainsi obtenir un système électrochrome, les demi-cellules A et B correspondant de préférence aux définitions à la revendication 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014108012 A1

- DE 102008062129 A1

**In der Beschreibung aufgeführte Nicht-Patentliteratur**

- **DONG ZHOU** ; **LI-ZEHN FAN** ; **HUANHUAN FAN** ; **QIAO SH**. Electrochemical performance: Electrochemical performance of trimethylolpropanetrimethylacrylate-based GPE prepared by in situ thermal polymerization. *Electrochimica Acta*, February 2013, vol. 89, 334-338

- **BERND TIEKE**. Makromolekulare Chemie - eine Einführung. VCH-Verlag, 2004, 270
- **T.G. FOX**. *Bull. Am. Phys. Soc.*, 1956, vol. 1, 123